**Europäisches Patentamt**

**European Patent Office**

**Office européen des brevets**

(19)

(11) Veröffentlichungsnummer: **0 153 584**
**B1**

(12) **EUROPÄISCHE PATENTSCHRIFT**

(45) Veröffentlichungstag der Patentschrift:
06.09.89

(51) Int. Cl.⁴: **B 41 B 19/00,** G 06 K 15/12,
G 06 K 15/02

(21) Anmeldenummer: 85100702.1

(22) Anmeldetag: 24.01.85

(54) **Verfahren und Einrichtung zum Aufzeichnen von Schriftzeichen.**

(30) Priorität: 21.02.84 DE 3406133

(43) Veröffentlichungstag der Anmeldung:
04.09.85 Patentblatt 85/36

(45) Bekanntmachung des Hinweises auf die Patenterteilung:
06.09.89 Patentblatt 89/36

(84) Benannte Vertragsstaaten:
AT BE CH DE FR GB IT LI NL SE

(56) Entgegenhaltungen:
EP-A- 0 096 079
WO-A-83/02179
DE-A- 2 254 913
DE-A- 2 413 680
DE-A- 2 731 955
GB-A- 2 119 982
US-A- 3 506 779

IEEE TRANSACTIONS ON CONSUMER ELECTRONICS,
Band CE-29, Nr. 3, August 1983, Seiten 438-442, IEEE,
New York, US; R.K. KRISHNAN et al.: "An approach to
character generation using cubic splines"

(73) Patentinhaber: DR.-ING. RUDOLF HELL GmbH,
Grenzstrasse 1-5, D-2300 Kiel 14 (DE)

(72) Erfinder: Blum, Dietrich, Klaus-Groth-Strasse 2,
D-2313 Raisdorf (DE)
Erfinder: Bröning, Jörg, Hohrott 23, D-2305 Heikendorf
(DE)

## Beschreibung

### Technisches Gebiet

Die Erfindung betrifft ein Verfahren zum punkt- und bildlinienweisen Aufzeichnen von Zeichen, insbesondere von Schriftzeichen, in einem Aufzeichnungsraster auf einem Aufzeichnungsmedium aus gespeicherten Zeichendaten, bei dem die Zeichendaten der aufzuzeichnenden Zeichen aufgerufen und in Steuerbefehle für ein Aufzeichnungsorgan umgewandelt werden, sowie eine Einrichtung zur Durchführung des Verfahrens, nachfolgend mit elektronischer Lichtsetzanlage bezeichnet.

### Stand der Technik

Eine elektronische Lichtsetzanlage mit einer Elektronenstrahlröhre als Aufzeichnungsorgan ist bereits aus der US-PS 3 305 841 bekannt. Die für einen Setzauftrag benötigten Schriftzeichen sind in Form von Schriftdaten in einem Schriftzeichen-Speicher abgelegt. Der zu setzende Text wird in einem Satzrechner in Textdaten umgewandelt, welche die Setzanweisungen für die Lichtsetzanlage darstellen. Im Setzbetrieb rufen die Textdaten nacheinander die zum Aufzeichnen der Schriftzeichen benötigten Schriftdaten aus dem Schriftzeichen-Speicher ab, und die ausgelesenen Schriftdaten werden in ein Videosignal umgewandelt, welches die Steuerbefehle für die Elektronenstrahlröhre liefert. Jedes Schriftzeichen wird auf dem Bildschirm der Elektronenstrahlröhre aus einer Vielzahl von nebeneinanderliegenden vertikalen Bildlinien in einem in Richtung der Textzeilen fortlaufenden Linienraster aufgezeichnet, wobei durch eine Hell/Dunkel-Tastung des Elektronenstrahls, die von dem Videosignal gesteuert wird, die Schriftzeichen entsprechend ihren Konturen aus schwarzen und weißen Abschnitten zusammengesetzt werden.

Die auf dem Bildschirm der Elektronenstrahlröhre aufgezeichneten Schriftzeichen werden mittels einer Optik auf ein Aufzeichnungsmedium belichtet.

Bei dieser bekannten Lichtsetzanlage müssen die Schriftzeichen der einzelnen Alphabete für alle vorkommenden Schriftgrößen abgespeichert sein, so daß die Kapazität des Schriftzeichen-Speichers sehr hoch ist.

Zur Reduzierung der Kapazität des Schriftzeichen-Speichers ist es üblich, die Schriftzeichen in Form von codierten Schriftdaten abzuspeichern. Dazu gibt es verschiedene Codier-Verfahren. Eine punktweise Codierung von Schriftzeichen ist z.B. aus der US-PS 3 305 841, eine Lauflängen-Codierung für die Bildlinienabschnitte aus der US-PS 3 480 943 und eine Codierung der Umrißlinien von Schriftzeichen aus der DE-OS 2 919 013 bekannt.

In der DE-PS 2 422 464 (amerikanische Patentschrift Re 30 679) wird bereits ein Verfahren zur Umrißcodierung von Schriftzeichen und zur Umwandlung der umrißcodierten Schriftdaten in Steuerbefehle für den Elektronenstrahl einer Elektronenstrahlröhre beim Aufzeichnen oder Setzen der Schriftzeichen angegeben. Bei dieser Umrißcodierung werden die Schriftzeichen durch Umrißlinien-Paare in einem XY-Koordinatensystem beschrieben, in dem die x-Koordinaten in Schritten gleicher Länge geändert werden. Jedes Umrißlinien-Paar wird durch die y-Koordinaten der Anfangspunkte und durch die Steigungen der Umrißlinien definiert, wobei die Steigungen als Änderungen der y-Koordinaten aufeinanderfolgender x-Koordinatenschritte ausgedrückt werden. Die Krümmung einer Schriftkontur wird somit als Folge von sich ändernden Steigungen angegeben. Die Schriftzeichen werden wiederum auf der Elektronenstrahlröhre aus nebeneinanderliegenden, vertikal zu den Textzeilen verlaufenden Bildlinien aufgebaut, wobei jedes Schriftzeichen für sich in der durch die zu setzende Textzeile vorgegebene Position und alle Schriftzeichen der Textzeilen nacheinander aufgezeichnet werden. Die Steuerbefehle zum Ein- und Ausschalten des Elektronenstrahls werden dabei durch Feststellen der jeweiligen Schnittpunkte der Umrißlinien-Paare mit der momentan aufzuzeichnenden Bildlinie gewonnen, wodurch der Elektronenstrahl jeweils zwischen einer oberen und einer zugehörigen unteren Umrißlinie eingeschaltet wird.

Die beschriebene Art der Gewinnung von Steuerbefehlen benötigt relativ viel Rechenzeit, so daß keine hohe Aufzeichnungsgeschwindigkeit erreicht wird. Durch die Verwendung einer Elektronenstrahlröhre als Aufzeichnungsorgan wird zwar eine typografisch hochwertige Qualität des Lichtsatzes erreicht, nachteilig ist aber, daß die nutzbare Bildschirmfläche der Elektronenstrahlröhre und damit das Aufzeichnungsformat begrenzt ist. Es besteht nämlich heutzutage der Wunsch, ganze Zeitungsseiten in einem Arbeitsgang zu setzen. Um in einer Lichtsetzanlage mit Elektronenstrahlröhre eine solche Zeitungsseite zu setzen, muß zwischen einzelnen Teilbelichtungen von der Größe der nutzbaren Bildschirmfläche eine relative Verschiebung zwischen der Bildschirmfläche und dem Aufzeichnungsmedium vorgenommen werden. Dies erfordert aber einen hohen mechanischen Aufwand, führt zu Positionierungsfehlern und verlangsamt die Aufzeichnungsgeschwindigkeit.

Aus der EP-A-0 096 079 ist bereits ein Verfahren und eine Einrichtung zum punkt- und bildlinienweisen Aufzeichnen ganzer Zeitungsseiten in einem Aufzeichnungsraster aus codierten Schriftdaten nach einem Layout-Plan bekannt. Dazu wird ein Aufzeichnungsorgan, z.B. ein Mosaik-Aufzeichnungsorgan, bildpunktweise über die Gesamtbreite der ganzen Zeitungsseite geführt, so daß jeweils volle Bildlinien der ganzen Zeitungsseite aufgezeichnet werden. Jede Bildlinie setzt sich dabei aus Teilbildlinien zusammen, die gemäß dem Layout-Plan zu verschiedenen Textblöcken oder Textzeilen gehören. Die zur Aufzeichnung der einzelnen Teilbildlinien benötigten, codierten Schriftdaten werden aus einem Schriftzeichen-Speicher abgerufen und in Steuerbefehle decodiert. Die Steuerbefehle der einzelnen Teilbildlinien werden entsprechend der Aufeinanderfolge der einzelnen Teilbildlinien innerhalb der vollen Bildlinie geordnet und bildpunktweise in einem Speicher abgelegt. Während der Aufzeichnung der Zeitungsseite werden dann die gespeicherten Steuerbefehle bildpunkt- und bildlinienweise in Synchronismus mit der Bewegung des Aufzeichnungsorgans über das Aufzeichnungsmedium ausgelesen und dem Aufzeichnungsorgan zugeführt.

Bei dem bekannten Verfahren sind die Schriftdaten nach Schriftarten und Schriftgrößen getrennt in einzelnen Schriftzeichen-Speichern abgelegt, die je nach Art und Größe des momentan aufzuzeichnenden Schriftzeichens adressiert werden müssen.

Zur Einsparung von Speicherkapazität ist es aus der EP-A-0 096 079 auch schon bekannt, die Zeitungsseite in aufeinanderfolgenden Streifen durch schrittweises Verschieben eines Belichtungs-Fensters über die Zeitungsseite zu belichten, dessen Höhe mehrere Bildlinien umfaßt und dessen Breite der Breite der Zeitungsseite entspricht. In diesem Falle werden jeweils nur die momentan zur Aufzeichnung in den einzelnen Positionen des Belichtungs-Fensters benötigten codierten Schriftdaten aus den betreffenden Schriftzeichen-Speichern abgerufen, zu Steuerbefehlen decodiert und in einem sogenannten Fenster-Speicher abgelegt, dessen Speicherkapazität nur der auf das Belichtungs-Fenster entfallenden Anzahl von Bildpunkten entspricht. Dieser Stand der Technik ist im Oberbegriff des geltenden Anspruchs 17 berücksichtigt.

Das bekannte Verfahren hat den Nachteil, daß bei Änderung der Schriftart und/oder Schriftgröße während der Aufzeichnung der Zeitungsseite auf verschiedene Schriftzeichen-Speicher zurückgegriffen werden muß. Um bei diesen Speicherzugriffen Zeit zu sparen und die prinzipiell schnelle Laser-Aufzeichnung überhaupt ausnutzen zu können, wird dort ein wiederholter Rückgriff auf die Schriftdaten eines momentan aufzuzeichnenden Schriftzeichens vermieden, indem jeweils alle Schriftdaten dieses Zeichens in einem ununterbrochenen Zugriff, d.h. in zusammenhängenden Zeitabschnitten, aus dem betreffenden Schriftzeichen-Speicher ausgelesen, in Steuerbefehle decodiert und die Steuerbefehle dann in den Fenster-Speicher überschrieben werden.

Die Realisierung des einmaligen Zugriffs auf die Schriftdaten des momentan aufzuzeichnenden Schriftzeichens und das zusammenhängende Einschreiben der Steuerbefehle in den Fenster-Speicher macht das bekannte Verfahren kompliziert und aufwendig.

Außerdem wird zur Durchführung des bekannten Verfahrens ein zusätzlicher, dem Fenster-Speicher nachgeschalteter Puffer-Speicher benötigt. Um das zusammenhängende Überschreiben der Steuerbefehle eines Schriftzeichens in den Fenster-Speicher zu ermöglichen, müssen nämlich immer erst bestimmte Speicherbereiche des Fenster-Speichers freigemacht werden, indem die in den betreffenden Speicherbereichen abgelegten Steuerbefehle in den Puffer-Speicher überschrieben werden. Die zum Überschreiben der Steuerbefehle in den Puffer-Speicher benötigte Transferzeit begrenzt die Aufzeichnungsgeschwindigkeit in nachteiliger Weise.

Voraussetzung für die einwandfreie Funktion des bekannten Verfahrens ist außerdem, daß ein aufzuzeichnendes Schriftzeichen jeweils voll in das Belichtungs-Fenster fällt (EP-A-0 096 079; Fig. 12).

Um dies zu erreichen, muß das Belichtungs-Fenster entsprechend den freigewordenen Speicherbereichen des Fenster-Speichers verschoben werden, wozu eine komplizierte Steuerung benötigt wird.

Ein weiterer Nachteil des bekannten Verfahrens besteht darin, daß das Einschreiben der Steuerbefehle in den Fenster-Speicher dann besonders kompliziert und aufwendig wird, wenn beispielsweise zwei in einer Textzeile aufeinanderfolgende Schriftzeichen unterschiedliche Grundlinienhöhen aufweisen (EP-A-0 096 079; Fig. 14) oder wenn Schriftzeichen mit Exponenten bzw. Indizes (EP-A-0 096 079; Fig. 17) aufgezeichnet werden müssen. Denn in diesem Falle muß auch noch vor der Aufzeichnung der Zeitungsseite die Reihenfolge festgelegt werden, in der die Steuerbefehle der Schriftzeichen einer Textzeile in den Fenster-Speicher eingeschrieben werden müssen.

Eine Umriß-Codierung von Schriftzeichen ist auch bereits aus den Druckschriften WO 83/02 179 und DE-A-2 254 913 bekannt. Dort wird aber ein abweichendes Approximationsverfahren angegeben, nach dem die umriß-codierten Schriftdaten in Steuerbefehle für das Aufzeichnungsorgan umgesetzt werden. In beiden Druckschriften wird außerdem keine Transformation zur Veränderung der Schriftzeichengröße aus einem Satz von umriß-codierten Schriftdaten angegeben.

Der vorliegenden Erfindung liegt die Aufgabe zugrunde, ein Verfahren und eine Einrichtung zum bildpunkt- und bildlinienweisen Aufzeichnen von Zeichen, insbesondere Schriftzeichen, anzugeben, bei denen die zum Aufzeichnen von Schriftzeichen unterschiedlicher Schriftart und/oder Schriftgröße benötigten, codierten Zeichendaten aus einem Satz codierter Zeichendaten erzeugt und in Steuerbefehle für eine schnelle und genaue Aufzeichnung auf einem Aufzeichnungsmedium in einem beliebigen Aufzeichnungsraster umgesetzt werden.

Diese Aufgabe wird in bezug auf das Verfahren durch die im Anspruch 1 und in bezug auf die Einrichtung durch die im Anspruch 17 angegebenen Merkmale gelöst. Vorteilhafte Weiterbildungen sind in den Unteransprüchen angegeben.

Mit dem erfindungsgemäßen Verfahren wird insbesondere eine hohe Aufzeichnungsgeschwindigkeit und eine gute Aufzeichnungsqualität erreicht. Durch die angegebene Umrißcodierung wird die Aufbereitung der codierten Zeichendaten in Steuerbefehle für alle Schriftvariationen besonders einfach, ohne daß Zeichendaten für die einzelnen Variationen separat abgespeichert werden müssen. Die Aufbereitung erfolgt außerdem verzerrungsfrei und mit einer hohen Auflösung.

## Kurze Beschreibung der Zeichnung

Die Erfindung wird im folgenden anhand der Fig. 1 bis 13 näher erläutert. Es zeigen:

Fig. 1 einen prinzipiellen Aufbau der Einrichtung zur Durchführung des Verfahrens;

Fig. 2 eine grafische Darstellung zur Erläuterung des Belichtungs-Fensters und des Such-Fensters;

Fig. 3 eine grafische Darstellung eines Schriftzeichen-Gevierts;

Fig. 4 ein Ausführungsbeispiel für den Videosignal-Generator;

Fig. 5 eine grafische Darstellung zur Interpolation;

Fig. 6 ein Schaltpunkt-Bild;

Fig. 7 eine grafische Darstellung zur Adressen-Ermittlung;

Fig. 8 weitere Schaltpunkt-Bilder;

Fig. 9 ein Ausführungsbeispiel für die Video-Speichereinrichtung;

Fig. 10 eine weitere grafische Darstellung zur Adressen-Ermittlung;

Fig. 11 eine grafische Darstellung zur Belichtung;

Fig. 12 ein Zeitdiagramm; und

Fig. 13 ein Ausführungsbeispiel der Interpolations-Stufe.

## Bester Weg zur Ausführung der Erfindung

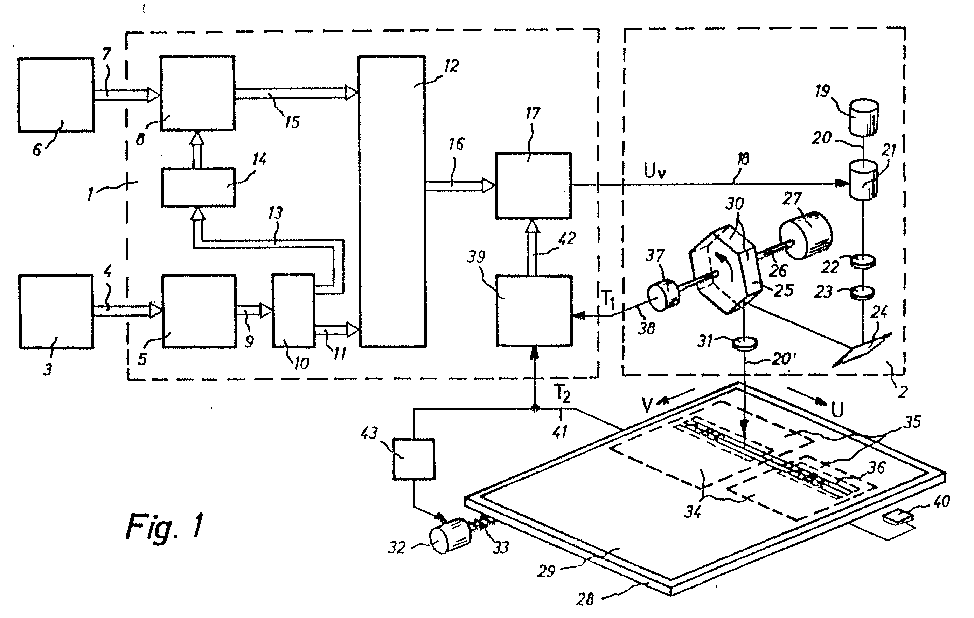

Fig. 1 zeigt den prinzipiellen Aufbau einer elektronischen Lichtsetzanlage zum Setzen von ganzen Zeitungsseiten, kurz Ganzseiten genannt, aus gespeicherten Schriftzeichen und Signets durch bildpunkt- und bildlinienweise Belichtung eines Aufzeichnungsmediums mittels eines relativ zum Aufzeichnungsmedium bewegten Lichtstrahls. Eine solche Lichtsetzanlage besteht aus einer Ansteuerschaltung 1, welche den zu setzenden Text in ein Videosignal $U_v$ umwandelt, und aus einer durch das Videosignal $U_v$ gesteuerten Belichtungseinheit 2.

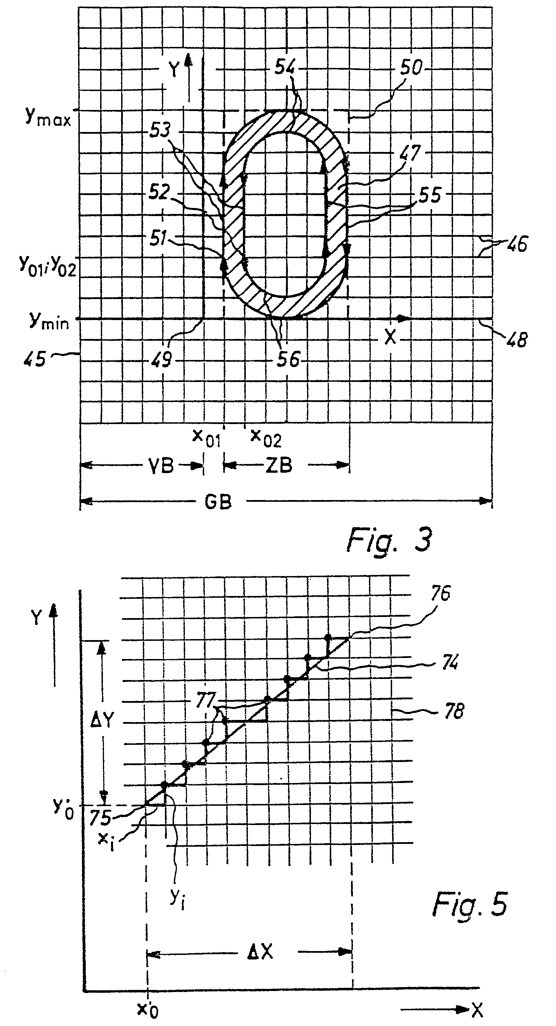

Aus einer externen Textdaten-Quelle 3, in der die Textdaten eines bereits mittels eines Satzrechners zeilenausgeschlossenen Textes abgelegt ist, werden die zum Belichten der Ganzseite erforderlichen Textdaten über eine Datenleitung 4 in eine Textseiten-Speichereinrichtung 5 der Ansteuerschaltung 1 überschrieben. Gleichzeitig werden die zum Belichten der betreffenden Ganzseite benötigten Zeichen- und Schriftfonts als umrißcodierte Zeichen- und Schriftdaten, nachfolgend allgemein mit Schriftdaten bezeichnet, aus einem ebenfalls externen Schriftfont-Archiv 6 über eine Datenleitung 7 in einen Schriftzeichen-Speicher 8 der Ansteuerschaltung 1 transferiert. Die Umrißcodierung wird später anhand der grafischen Darstellung in Fig. 3 näher erläutert.

Die Textdaten der Ganzseite werden aus der Textseiten-Speichereinrichtung 5 ausgelesen und über eine Datenleitung 9 einem Decodierer 10 zugeführt, welcher die Textdaten in Schrift- und Positionsbefehle sowie in Schriftzeichenbefehle decodiert. Die Schriftbefehle, wie z.B. Schriftgröße, Dickte, Schriftwinkel, Kursivwinkel und Aufzeichnungsfeinheit und die Positionsbefehle für die einzelnen Textzeilen werden über eine Datenleitung 11 einem Videosignal-Generator 12 zugeführt. Die Aufzeichnungsbefehle gelangen über eine Datenleitung 13 auf ein Speichersteuerwerk 14 für den Schriftzeichen-Speicher 8. Die Schriftzeichenbefehle adressieren dort die umrißcodierten Schriftdaten der zu belichtenden Zeichen und Schriftzeichen, nachfolgend allgemein als Schriftzeichen bezeichnet, welche Schriftzeichen für Schriftzeichen aus dem Schriftzeichen-Speicher 8 ausgelesen und über eine Datenleitung 15 dem Videosignal-Generator 12 zugeführt werden.

Der Videosignal-Generator 12 formt die umrißcodierten Schriftdaten unter Berücksichtigung der entsprechenden Schriftbefehle in digitale Schaltpunkt-Markierungssignale um, die über eine Datenleitung 16 in einer nachgeschalteten Video-Speichereinrichtung 17 bildpunkt- und zeilenweise orientiert und in der für die bildlinienweise Belichtung benötigten Reihenfolge zwischengespeichert und von dort als Videosignal $U_v$ über eine Leitung 18 an die Belichtungseinheit 2 weitergegeben werden.

Die Belichtungseinheit 2 besteht aus einer Lichtquelle 19, z.B. einem Laser-Generator. Der von der Lichtquelle 19 erzeugte Lichtstrahl 20 gelangt durch einen Lichtmodulator 21, z.B. in Form eines akustooptischen Modulators (AOM), eine Lochblende 22, eine Linse 23 auf einen Umlenk-Spiegel 24 und wird von dort auf einen Vielflächen-Drehspiegel 25 (Polygon-Spiegel) reflektiert, dessen Drehachse 26 senkrecht zur optischen Achse des Lichtstrahls 20 liegt. Ein Motor 27 läßt den Vielflächen-Drehspiegel 25 in Richtung des Pfeiles mit konstanter Winkelgeschwindigkeit rotieren. Auf einem Flachbett-Aufzeichnungsträger 28 ist ein Aufzeichnungsmedium 29 im Format der zu belichtenden Ganzseite angeordnet. Das Aufzeichnungsmedium 29 ist beispielsweise Filmmaterial oder eine lichtempfindliche Druckplatte. Durch die Rotation des Vielflächen-Drehspiegels 25 wird der von den einzelnen Spiegelflächen 30 reflektierte und mittels eines Objektivs 31 auf das Aufzeichnungsmedium 29 fokussierte Lichtstrahl 20' Bildlinie für Bildlinie in Aufzeichnungsrichtung (U-Richtung) über das Aufzeichnungsmedium 29 ausgelenkt, wobei der Flachbett-Aufzeichnungsträger 28 gleichzeitig eine schrittweise oder kontinuierliche, senkrecht zur Aufzeichnungsrichtung gerichtete Vorschubbewegung (V-Richtung) mit Hilfe eines Motors 32 und einer Spindel 33 ausführt. Auf diese Art und Weise überstreicht der Lichtstrahl 20' das Aufzeichnungsmedium 29 jeweils in vollen Bildlinien 36 in einem Aufzeichnungsraster, dessen Rasterweite von der Aufzeichnungsfeinheit bzw. von den Bildpunkt- und Bildlinienabständen abhängt. Eine solche Ganzseite umfaßt beispielsweise einzelne, nach einem Layout-Plan angeordnete Textblöcke, auch Artikel genannt. Die Textblöcke 34 bestehen aus einzelnen Textzeilen 35 und die Textzeile 35 aus den zu belichtenden Schriftzeichen. Jede Textzeile 35 umfaßt meistens mehrere Bildlinien 36. Da der Lichtstrahl 20' jeweils eine volle Bildlinie 36 belichtet, deren Länge ungefähr der Gesamtbreite der Ganzseite entspricht, setzt sich jede volle Bildlinie 36 aus Teilbildlinien zusammen, die zu verschiedenen Textblöcken 34 bzw. Textzeilen 35 gehören. Der Videosignal-Generator 12 muß daher die einzelnen Teilbildlinien zu den vollen Bildlinien 36 zusammenfügen, indem die aufbereiteten Videodaten der einzelnen Bildpunkte auf denjenigen Speicherplätzen der Video-Speichereinrichtung 17 abgelegt werden, welche den Positionen der zugehörigen Bildpunkte innerhalb der vollen Bildlinien 36 entsprechen. Die Belichtung des Aufzeichnungsmediums 29 kann positiv oder negativ erfolgen.

Bei Positiv-Belichtung beispielsweise besteht jede Bildlinie bzw. Teilbildlinie aus unbelichteten Weißabschnitten und belichteten Schwarzabschnitten. In diesem Falle werden die Schriftzeichen bildlinienweise aus Schwarzabschnitten aufgebaut, wobei während der Aufzeichnung einer vollen Bildlinie 36 jeweils nur ein Schwarzabschnitt in jedem aufeinanderfolgenden Schriftzeichen belichtet wird. Die Längen der Schwarz- und Weißabschnitte werden durch die Einschaltdauer bestimmt, die mittels des akustooptischen Modulators 21 durch das Videosignal $U_v$ auf der Leitung 18 gesteuert wird.

Das Auslesen des Videosignals $U_v$ aus der Video-Speichereinrichtung 17 ist mit der relativen Bewegung des Lichtstrahls 20' über das Aufzeichnungsmedium 29 synchronisiert. Dazu ist mit der Drehachse 26 des Vielflächen-Drehspiegels 25 ein Impulsgeber 37 gekoppelt, welcher eine Bildpunkt-Taktfolge $T_1$ erzeugt. Die Bildpunkt-Taktfolge $T_1$ wird über eine Leitung 38 einer Synchronisier-Stufe 39 zugeführt.

Außerhalb des Flachbett-Aufzeichnungsträgers 28 ist in der Ablenkebene des Lichtstrahls 20' ein optoelektronischer Impulsgeber 40 angeordnet, welcher beim Auftreffen des Lichtstrahls 20' jeweils am Ende einer vollen Bildlinie 36 eine Taktfolge $T_2$ «Bildlinienende» auf einer Leitung 41 erzeugt, die ebenfalls der Synchronisier-Stufe 39 zugeführt wird. In der Synchronisier-Stufe 39 werden aus der Bildpunkt-Taktfolge $T_1$ und der Taktfolge $T_2$ «Bildlinienende» Lese-Adressen und Lese-Befehle für die Video-Speichereinrichtung 17 gewonnen, die dieser über eine Adreß- und Steuerleitung 42 zugeführt werden. Die Taktfolge $T_2$ «Bildlinienende» wird bei schrittweiser Vorschubbewegung des Flachbett-Aufzeichnungsträgers 28 gleichzeitig einer Vorschubsteuerung 43 für den Vorschubmotor 32 zugeführt, der jeweils am Ende einer vollen Bildlinie 36 einen Vorschubschritt zur nächsten Bildlinie 36 ausführt. Die Belichtungseinheit 2 kann alternativ auch aus einer Fotodioden-Zeile oder einer Fotodioden-Matrix bestehen.

Im einfachsten Fall wird die Ganzseite 29 in einem Durchgang belichtet. Dann ist die Video-Speichereinrichtung 17 als bildpunkt- und zeilenweise orientierter Ganzseiten-Speicher ausgebildet, in dem die Videodaten für alle Bildpunkte der Ganzseite 29 in der zur Belichtung benötigten Reihenfolge abgelegt sind. Ein solcher Ganzseiten-Speicher mit der Höhe der Ganzseite und der Breite einer vollen Bildlinie gibt dann die Information der Ganzseite bildpunktgenau wieder.

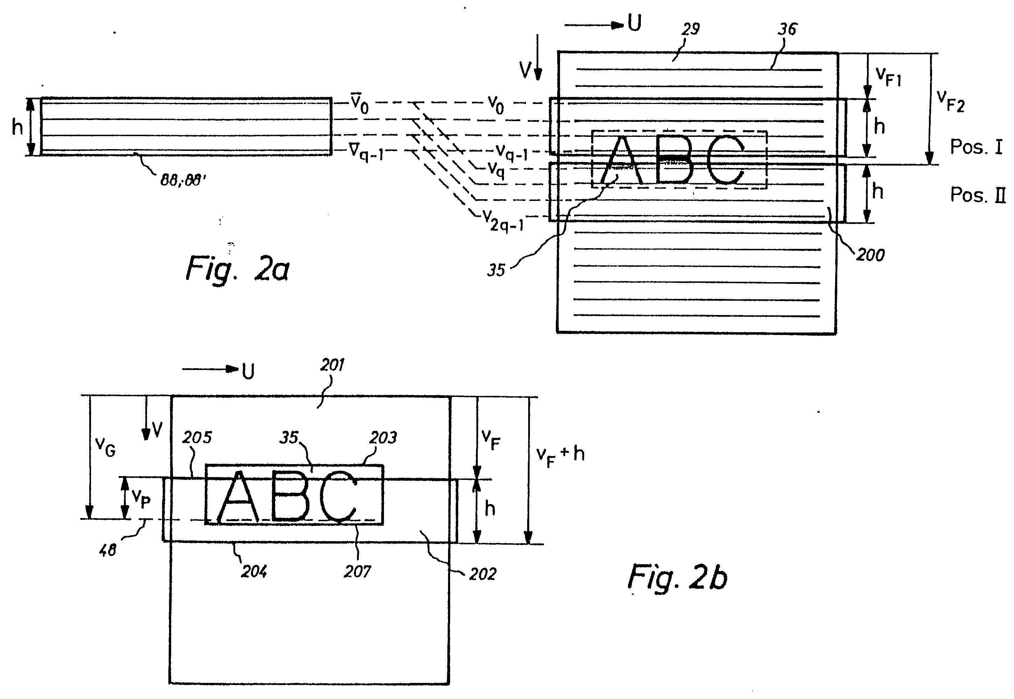

In vorteilhafter Weise wird die Ganzseite 29 zeitlich nacheinander in streifenförmigen Abschnitten belichtet, indem ein Belichtungs-Fenster mit der Höhe h und der Breite einer vollen Bildlinie 36 über die Ganzseite 29 schrittweise jeweils um die Höhe h verschoben wird. Dieser Vorgang ist in Fig. 2a grafisch näher erläutert.

Fig. 2a zeigt noch einmal die zu belichtende Ganzseite 29 mit den Bildlinien 36 und einer Textzeile 35, auf die eine bestimmte Anzahl von Bildlinien 36 entfällt. Das Belichtungs-Fenster 200 hat z.B. der Höhe h entsprechend eine Anzahl q von Bildlinien 36 und die Breite einer vollen Bildlinie 36 mit p Bildpunkten. Die Position des Belichtungs-Fensters 200 auf die Ganzseite wird jeweils durch einen vertikalen Koordinatenwert $v_F$ (Oberkante des Belichtungs-Fensters) definiert. In der Position I des Belichtungs-Fensters 200 mit dem Koordinatenwert $v_{F1}$ werden beispielsweise die Bildlinien $v_0$ bis $v_{q-1}$ belichtet, danach wird das Belichtungs-Fenster 200 ungeachtet der Lage der Textzeile 35 um seine Höhe h in die Position II mit dem Koordinatenwert $v_{F2}$ verschoben und die entsprechenden Bildlinien $v_q$ bis $v_{2q-1}$ belichtet. Da die dargestellte Textzeile 35 nicht voll in eines der Belichtungs-Fenster 200 fällt, wird diese Textzeile erfindungsgemäß durch zwei aufeinanderfolgende Belichtungen aufgezeichnet, nämlich der obere Teil der Textzeile 35 in der Position I und der untere Teil der Textzeile 35 in der Position II des Belichtungs-Fensters 200, wodurch eine hohe Aufzeichnungsgeschwindigkeit erreicht wird.

Die Video-Speichereinrichtung 17 weist in diesem Falle einen bildpunkt- und zeilenweise orientierten Teilspeicher 88 geringerer Kapazität auf, der in der Fig. 2a nur schematisch angedeutet ist. Dieser Teilspeicher 88 hat die Höhe des Belichtungs-Fensters 200 mit q Speicherzeilen $\bar{v}_0$ bis $\bar{v}_{q-1}$ und die Breite einer vollen Bildlinie 36 und somit eine Speicherkapazität für $p \times q$ Videodaten. In diesem Teilspeicher 88 werden jeweils nur die zu den einzelnen Positionen des Belichtungs-Fensters 200 gehörenden Videodaten abgelegt, so daß der Teilspeicher 88 jeweils nur die Information des betreffenden Belichtungs-Fensters 200 auf der Ganzseite 29 widerspiegelt. Bei der Belichtung der Ganzseite 29 müssen daher die Speicherzeilen $\bar{v}_0$ bis $\bar{v}_{q-1}$ des Teilspeichers 88 den gerade zu belichtenden Bildlinien in der jeweiligen Position des Belichtungs-Fensters 200 zugeordnet werden, z.B. in der Position I des Belichtungs-Fensters 200 den Bildlinien $v_0$ bis $v_{q-1}$ und in der Position II den Bildlinien $v_q$ bis $v_{2q-1}$, wie dies in Fig. 2a schematisch angedeutet ist.

In vorteilhafter Weise sind in dem Ausführungsbeispiel zwei Teilspeicher 88 und 88' vorgesehen, die im Wechselbetrieb arbeiten. Während die Videodaten für die momentan aufzuzeichnende Position des Belichtungs-Fensters 200 aus dem einen Teilspeicher ausgelesen werden, werden bereits die neuen Videodaten für die nachfolgende Position des Belichtungs-Fensters 200 in den anderen Teilspeicher eingeschrieben.

Wie bereits erwähnt müssen jeweils die zu den einzelnen Positionen des Belichtungs-Fensters 200 auf der Ganzseite 29 gehörenden Videodaten und diese in der zur Belichtung innerhalb des betreffenden Belichtungs-Fensters 200 erforderlichen Reihenfolge bildpunkt- und zeilenweise in den Teilspeichern abgelegt und aus diesen ausgelesen werden. Welche Textdaten bzw. daraus abgeleiteten Videodaten dafür jeweils benötigt werden, ist von dem Layout-Plan der aufzuzeichnenden Ganzseite 29 abhängig.

Im einfachsten Fall werden die in der Textdaten-Quelle 3 ungeordnet abgelegten Textdaten vor der Belichtung in der Textseiten-Speichereinrichtung 5 in der erforderlichen Reihenfolge vorsortiert, dann in die Videodaten umgewandelt, was aber zeitaufwendig ist. Bei dem Ausführungsbeispiel findet dagegen keine Vorsortierung statt. In vorteilhafter Weise werden dort die erforderlichen Textdaten jeweils für die aktuelle Position des Belichtungs-Fensters 200 während der Belichtung aus der Menge der unsortierten Textdaten herausgesucht. Bei diesem Suchvorgang wird in der Textseiten-Speichereinrichtung 5 zunächst festgestellt, welche Artikel und Textzeilen jeweils ganz oder nur teilweise in die aktuelle Position des Belichtungs-Fensters 200 fallen und dann die relevanten Textdaten in der Reihenfolge ihrer Feststellung aufgerufen und in die Videodaten umgewandelt.

Dieser Suchvorgang wird grafisch anhand einer Fig. 2b erläutert. Fig. 2b zeigt einen Layout-Plan 201 der zu belichtenden Ganzseite 29 mit der Textzeile 35. Den Suchvorgang kann man sich nun so vorstellen, daß ein dem Belichtungs-Fenster 200 (Fig. 2a) auf der Ganzseite 29 entsprechendes Such-Fenster 202 über den Layout-Plan 201 verschoben wird und nur die Textdaten derjenigen Textzeilen 35 aufgerufen werden, die in der jeweiligen Position des Such-Fensters 202 ganz oder nur teilweise im Such-Fenster 202 sichtbar sind.

Dazu enthalten die Textdaten Artikel-Geometriedaten und Zeilen-Geometriedaten, welche die Lage der Artikel und Textzeilen im Layout-Plan 201 durch Koordinatenwerte u und v definieren. Die jeweils in das betreffende Such-Fenster 202 fallenden oder hineinragenden Artikel und Textzeilen werden daher durch Untersuchung der Geometriedaten, d.h. durch einen Vergleich der vertikalen Koordinatenwerte v der Textzeilen mit den vertikalen Koordinatenwerten $v_F$ für die verschiedenen Positionen des Such-Fensters 202 auf dem Layout-Plan 201 in der Textseiten-Speichereinrichtung 5 festgestellt, indem beispielsweise die Oberkante 203 der Textzeile 35 mit der Unterkante 204 ($v_F + h$) des Such-Fensters 202 und die Oberkante 205 ($v_F$) des Such-Fensters 202 mit der Unterkante 207 der Textzeile 35 verglichen werden. In dem dargestellten Beispiel fällt in das Such-Fenster 202 nur ein Teil der Textzeile 35, dessen vertikale Ausdehnung $v_P$ sich aus der Differenz des Koordinatenwertes $v_G$ der Schriftgrundlinie 207 der Textzeile 35 und dem Koordinatenwert $v_F$ ergibt.

Nachfolgend wird das erfindungsgemäße Verfahren und die Einrichtung im einzelnen näher erläutert.

In einem ersten Verfahrensschritt werden bei der Umrißcodierung der Schriftzeichen geschlossene Umrißlinien, ausgehend von einem Startpunkt auf jeder Kontur, durch aufeinanderfolgende Geradenabschnitte bzw. Geradenabschnitte und Kurvenabschnitte beschrieben und deren Koordinatenwerte in einem auf das Schriftzeichen-Geviert bezogenen Codierungsraster bestimmt und als umrißcodierte Schriftdaten gespeichert.

Die Umrißcodierung der Schriftzeichen und die Form der im Schriftzeichen-Speicher 8 der Ansteuerschaltung 1 abgelegten codierten Schriftdaten wird anhand der Fig. 3 erläutert.

Fig. 3 zeigt ein Schriftzeichen-Geviert 45 mit einem Codierungsraster 46, das der maximalen möglichen Aufzeichnungsfeinheit entspricht. In das Codierungsraster 46 ist ein Schriftzeichen 47, im dargestellten Beispiel ein stark vereinfachtes «O», auf der Schriftgrundlinie 48 dargestellt. Für die Umrißcodierung des Schriftzeichens 47 ist ein XY-Koordinatensystem 49 vorgesehen, dessen X-Achse und dessen Ursprung auf der Schriftgrundlinie 48 des Schriftzeichens 47 liegt. Das Schriftzeichen 47 wird von einer rechteckförmigen Zeichenfläche 50 umschlossen, welche die eigentliche Information des Schriftzeichens 47 enthält. Die Breite der Zeichenfläche 50 entspricht der Zeichenbreite (ZB), und die Höhe wird durch die Werte $y_{max}$ und $y_{min}$ von der Schriftgrundlinie 48 angegeben. Ferner sind noch die Vorbreite (VB) und die Gesamtbreite (GB) des Schriftzeichen-Gevierts 45 eingetragen.

Bei der Umrißcodierung des Schriftzeichens werden geschlossene Umrißlinien (Konturen), ausgehend von einem Startpunkt auf jeder Kontur, in bestimmten Codierungsrichtungen umfahren und durch aufeinanderfolgende Konturabschnitte beschrieben, deren Art, Länge und Lage als codierte Schriftdaten angegeben werden. Die Konturabschnitte können Einheitsvektoren, Vektoren unterschiedlicher Länge oder Geradenabschnitte und Kurvenabschnitte sein. Dabei wird z.B. eine äußere Kontur im Uhrzeigersinn und eine innere Kontur entgegen dem Uhrzeigersinn umfahren.

In einer bevorzugten Umrißcodierung werden die Umrißlinien, wie in Fig. 3 dargestellt, durch Konturabschnitte in Form von Geradenabschnitten und Kreisabschnitten beschrieben. In dem stark vereinfacht dargestellten Schriftzeichen «O» wird sowohl die äußere Kontur ausgehend von einem Startpunkt 51 mit den Koordinaten $x_{01}$ und $y_{01}$ als auch die innere Kontur ausgehend von einem Startpunkt 52 mit den Koordinaten $x_{02}$ und $y_{02}$ in den Codierungsrichtungen (Umlauf in Richtung der Pfeile) durch Geradenabschnitte 53, Kreisabschnitte 54, Geradenabschnitte 55 und Kreisabschnitte 56 beschrieben.

In dem Schriftcode werden jeweils aufeinanderfolgende Konturabschnitte desselben Typs (Geradenabschnitt, Kreisabschnitt im Uhrzeigersinn, Kreisabschnitt entgegen dem Uhrzeigersinn) zu einem Konturbefehl zusammengefaßt. Der Konturbefehl enthält eine Kennung für den Typ, eine Angabe über die Anzahl der Konturabschnitte sowie die Koordinatenwerte x und y für die einzelnen Konturabschnitte, bezogen auf das XY-Koordinatensystem 49, wobei für einen Geradenabschnitt und einen Kreisabschnitt jeweils die Endpunkt-Koordinaten und für einen Kreisabschnitt zusätzlich die Anfangs-Koordinaten relativ zum Kreismittelpunkt des betreffenden Kreisabschnitts angegeben werden.

Der Konturbefehl für einen Geradenabschnitt enthält folgende Angaben:

1. «Geradenabschnitt» (Lin);
2. Anzahl der Geradenabschnitte;
3. Endpunkt-Koordinaten x und y des ersten Geradenabschnitts;
4. Endpunkt-Koordinaten x und y des zweiten Geradenabschnitts sowie Endpunkt-Koordinaten x und y weiterer Geradenabschnitte entsprechend der Anzahl der Geradenabschnitte nach Punkt 2.

Der Konturbefehl für einen Kreisabschnitt enthält dagegen folgende Angaben:

1. «Kreisabschnitt im Uhrzeigersinn» (CW) oder «Kreisabschnitt entgegen dem Uhrzeigersinn» (ACW);
2. Anzahl der aufeinanderfolgenden Kreisabschnitte;
3. Anfangspunkt-Koordinaten x und y des ersten Kreisabschnitts als relative Koordinaten zum Mittelpunkt des Kreisabschnitts;
4. Endpunkt-Koordinaten x und y als Absolutwerte; sowie Wiederholung der Punkte 3 und 4 für weitere Kreisabschnitte entsprechend der Anzahl nach Punkt 2.

Weitere Konturbefehle legen das Ende einer Kontur und das Ende des ganzen Schriftzeichens fest.

Die umrißcodierten Schriftdaten der einzelnen Schriftzeichen, die im Schriftzeichen-Speicher 8 abgelegt sind, setzen sich aus den genannten Konturbefehlen für die einzelnen Konturabschnitte des Schriftzeichens sowie aus Kenndaten des Schriftzeichen-Gevierts 45 zusammen, wobei die nachfolgenden Punkte 1 bis 4 Kenndaten und die Punkte 5 bis 10 Konturbefehle sind.

1. Vorbreite (VB);
2. Zeichenbreite (ZB);
3. Gesamtbreite (GB);
4. Vertikale Ausdehnung $Y_{max}$ und $y_{min}$ der Zeichenfläche 50;
5. Startpunkt-Koordinaten $x_0$ und $y_0$ der ersten Kontur;
6. Konturbefehle für die erste Kontur (Geraden- und Kreisabschnitte);
7. Konturbefehl «Ende der Kontur»;
8. Startpunkt-Koordinaten $x_0$ und $y_0$ der zweiten Kontur;
9. Konturbefehl für die zweite Kontur (Geraden- und Kreisabschnitte);
10. Konturbefehl «Ende der Kontur»; sowie Wiederholungen der Punkte 5 bis 7 entsprechend der Anzahl der Konturen, wobei am Ende der letzten Kontur eines Schriftzeichens anstelle des Konturbefehls «Ende der Kontur» der Konturbefehl «Ende des Zeichens» gegeben wird.

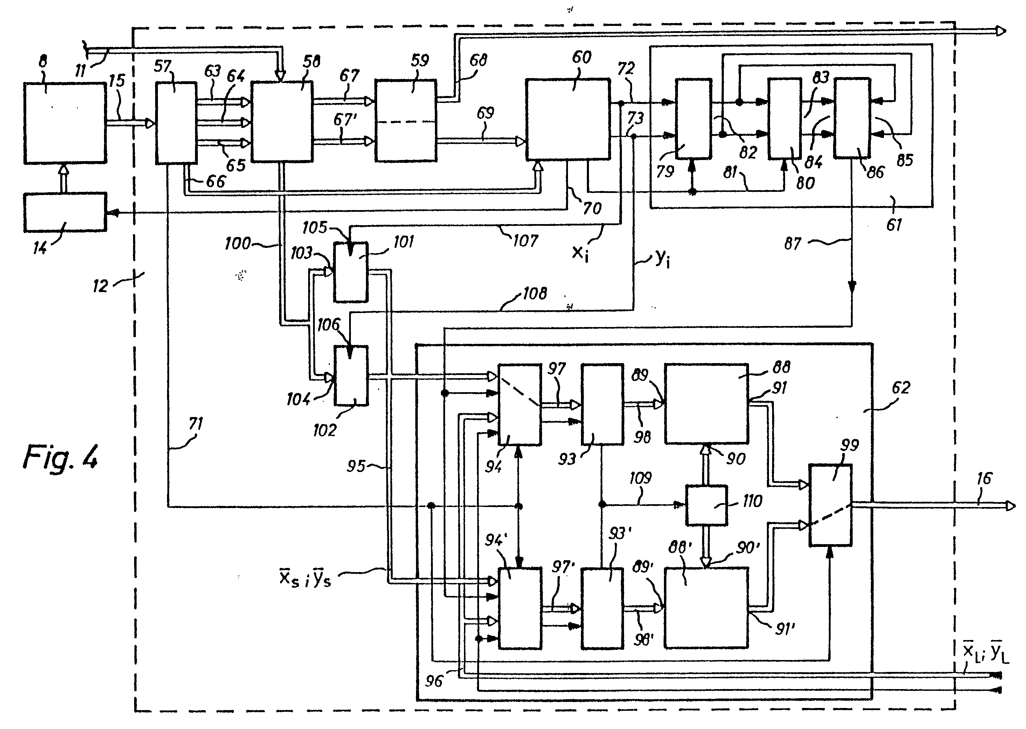

Die aus dem Schriftzeichen-Speicher 8 ausgelesenen, umrißcodierten Schriftdaten werden in dem Videosignal-Generator 12 weiterverarbeitet, der in Fig. 4 näher erläutert ist.

Der Videosignal-Generator 12 umfaßt einen Schriftzeichen-Decodierer 57, eine Transformations-Stufe 58, eine Rechen-Stufe 59, eine Interpolations-Stufe 60, eine Auswerte-Stufe 61 sowie eine Schaltpunkt-Speichereinrichtung 62.

In dem Videosignal-Generator 12 werden zunächst in einem zweiten Verfahrensschritt für jedes aufgerufene Schriftzeichen die Koordinatenwerte $x_0$ und $y_0$ der Startpunkte und die Endpunkt-Koordinaten x und y der Konturabschnitte um einen Größenfaktor geändert, der sich aus der aufzuzeichnenden Zeichengröße und dem Verhältnis zwischen Aufzeichnungsraster und Codierungsraster ergibt. Dazu werden die aus dem Schriftzeichen-Speicher 8 über die Datenleitung 15 ausgelesenen umrißcodierten Schriftdaten in dem Schriftzeichen-Decodierer 57 in die Längenwerte «Vorbreite» (VB), «Zeichenbreite» (ZB), «Gesamtbreite» (GB) sowie in die Längenwerte $y_{max}$ und $y_{min}$ der Zeichenfläche 50 auf einer Datenleitung 63, ferner in die Startpunkt-Koordinaten $x_0$ und $y_0$ auf einer Datenleitung 64, in die Endpunkt-Koordinatenwerte x und y für die einzelnen Konturabschnitte auf einer Datenleitung 65 und in die Konturbefehle «Lin» für Geradenabschnitte, «CW» für Kreisabschnitte im Uhrzeigersinn und in «ACW» für Kreisabschnitte entgegen dem Uhrzeigersinn auf einer Datenleitung 66 decodiert. Die Konturbefehle werden über die Datenleitung 66 der Interpolations-Stufe 60 zugeführt.

Die Schriftbefehle, wie Aufzeichnungsfeinheit, Schriftgröße, Kursivwinkel und Schriftwinkel werden der Transformations-Stufe 58 über die Datenleitung 11 zugeführt. In der Transformations-Stufe 58 werden die Längenwerte, die Startpunkt-Koordinaten $x_0$ und $y_0$ und die Endpunkt-Koordinatenwerte x und y der Konturabschnitte, die im Schriftzeichen-Speicher 8 im Codierungsraster codiert gespeichert sind, um den genannten Größenfaktor verändert. Bei der Änderung der Längenwerte und der Startpunkt-Koordinaten $x_0$ und $y_0$ wird gegebenenfalls zusätzlich noch der Schriftwinkel und der Kursivwinkel berücksichtigt. In der Rechen-Stufe 59 wird aus der geänderten Zeichenbreite ZB' und den geänderten Werten $y'_{max}$ und $y'_{min}$, die der Rechen-Stufe 59 von der Transformations-Stufe 58 über eine Datenleitung 67 zugeführt werden, die geänderte und gegebenenfalls noch gedrehte Zeichenfläche 50' berechnet. Die berechneten Startpunkt-Koordinaten $x_0'$ und $y_0'$, die Breite ZB' und die Länge $y'_{max}-y'_{max}$ der neuen Zeichenfläche 50' sowie die geänderte Gesamtbreite GB' des Schriftzeichen-Gevierts 45 werden über eine Datenleitung 68 ausgegeben. Gleichzeitig wird in der Rechen-Stufe 59 aus den geänderten Endpunkt-Koordinatenwerten x' und y' der Konturabschnitte auf der Datenleitung 67′ die Differenzwerte $\Delta x$ und $\Delta y$ zwischen dem Anfangspunkt und dem Endpunkt eines jeden Konturabschnitts berechnet und über eine Datenleitung 69 in die Interpolations-Stufe 60 überschrieben.

Damit sind die umrißcodierten Schriftdaten zur Umwandlung in die Videodaten für das Aufzeichnungsorgan aufbereitet.

In einem dritten Verfahrensschritt werden diejenigen Schaltpunkte für die Belichtungseinheit 2 in Form der Videodaten ermittelt, die zur Aufzeichnung der Schriftzeichen erforderlich sind. Dazu wird zunächst durch eine schrittweise Interpolation zwischen den Schnittpunkten des Aufzeichnungsrasters für die einzelnen, aufeinanderfolgenden Konturabschnitte eines Schriftzeichens diejenigen Bildpunkte im Aufzeichnungsraster festgestellt, welche die Konturabschnitte möglichst gut annähern. Bei der Interpolation werden jeweils aufeinanderfolgende Interpolationsschritte auf eine Richtungsänderung überprüft, und die zwischen zwei aufeinanderfolgenden Interpolationsschritten liegenden Bildpunkte dann als relevante Schaltpunkte durch ein Schaltpunkt-Markierungssignal markiert, wenn eine bestimmte Interpolationsschritt-Kombination vorliegt.

Bei der Interpolation in der Interpolations-Stufe 60 wird jeder Konturabschnitt von seinem Anfangspunkt bis zu seinem Endpunkt durch rechtwinklige Interpolationsschritte $\pm x_i$ und $\pm y_i$ von der Schrittweite des Aufzeichnungsrasters und in Richtung des Aufzeichnungsrasters und/oder durch Diagonalschritte $\pm x_i/\pm y_i$ angenähert.

Die Bildpunkt-Koordinaten $x^*$ und $y^*$ ergeben sich dabei nach Gleichung (1) aus den geänderten Startpunkt-Koordinaten $x_0'$ und $y_0'$ und aus einer vorzeichenrichtigen Addition der ausgeführten Interpolationsschritte zu den Bildpunkten hin.

$$x^* = x_0' + \sum_1^n x_i$$
$$y^* = y_0' + \sum_1^n y_1 \qquad (1)$$

Sobald der Enpunkt eines Konturabschnittes erreicht ist, wird in der Interpolations-Stufe 60 ein Signal «Abschnittsende» erzeugt, welches über eine Leitung 70 an das Speicher-Steuerwerk 14 für den Schriftzeichen-Speicher 8 gegeben wird, wodurch die Schriftdaten des nächsten Konturabschnitts des betreffenden Schriftzeichens zur Weiterverarbeitung ausgegeben werden, bis die Schriftdaten aller Konturabschnitte des betreffenden Schriftzeichens ausgelesen sind und in dem Schriftzeichen-Decodierer 57 ein Signal «Schriftzeichenende» auf einer Leitung 71 erzeugt wird.

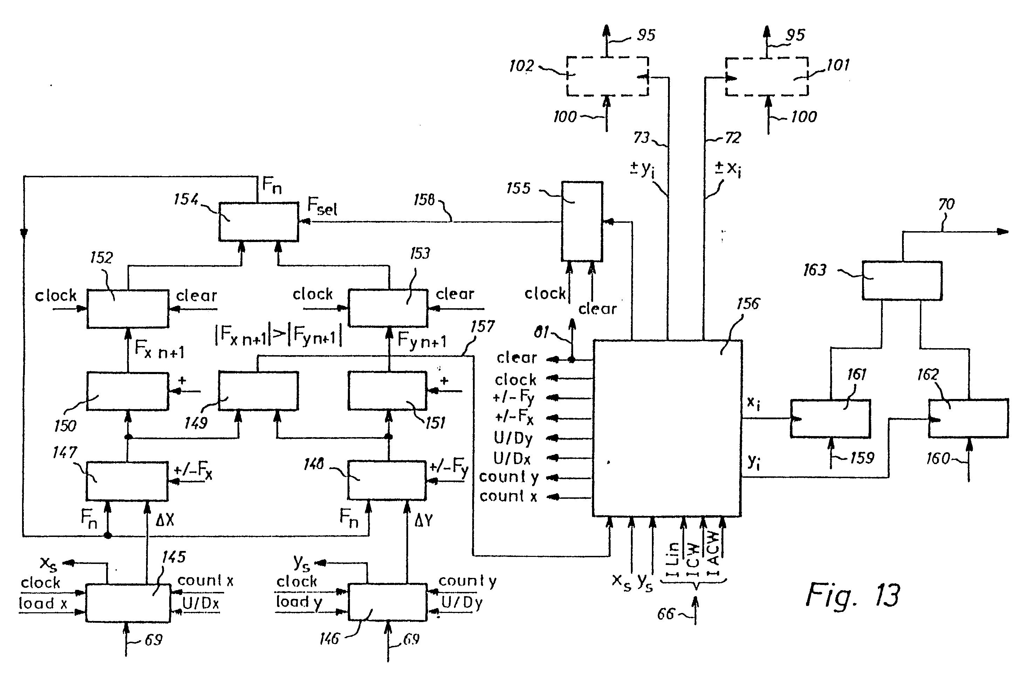

Ein Ausführungsbeispiel für die Interpolations-Stufe 60 zeigt Fig. 13. Zur Untersuchung der interpolierten Bildpunkte auf relevante Schaltpunkte hin werden die ausgeführten Interpolationsschritte $\pm x_i$ und $\pm y_i$ über Leitungen 72 und 73 an die Auswerte-Stufe 61 weitergeleitet, in der zur Bestimmung der relevanten Schaltpunkte jeweils die Richtung eines Interpolationsschrittes mit der Richtung des vorangegangenen Interpolationsschrittes verglichen wird und in der ein Bildpunkt dann als Schaltpunkt markiert wird, wenn mindestens einer der aufeinanderfolgenden Interpolationsschritte senkrecht zur Bildlinienrichtung und beide aufeinanderfolgenden Interpolationsschritte in Codierungsrichtung erfolgen, wenn also eine bestimmte Interpolationsschritt-Kombination vorliegt. Dadurch werden in vorteilhafter Weise redundante Schaltpunkte, insbesondere auf horizontalen Konturabschnitten, unterdrückt.

Die Auswerte-Stufe 61 besteht z.B. aus zwei hintereinandergeschalteten Registern 79 und 80 zur Zwischenspeicherung der Interpolationsschritte $\pm x_i$ und $\pm y_i$ mit den zugehörigen Vorzeichen. Die Register 79 und 80 werden über eine Leitung 81 von der Interpolations-Stufe 60 getaktet. Der in das Register 79 eingeschriebene Interpolationsschritt wird mit dem nächsten Takt in das Register 80 übernommen, während in das Register 79 der nachfolgende Interpolationsschritt eingeschrieben wird, so daß in den Registern 79 und 80 jeweils zwei aufeinanderfolgende Interpolationsschritte gespeichert sind. Die Datenausgänge 82 und 83 der Register 79 und 80 sind an die Adressen-Eingänge 84 und 85 eines Festwert-Speichers 86 geführt, in dem die Interpolationsschritt-Kombination für die Markierung der Bildpunkte als Schaltpunkte in Abhängigkeit der Richtungsänderung von zwei aufeinanderfolgenden Interpolationsschritten in Codierungsrichtung gespeichert sind. Diese Interpolationsschritt-Kombinationen sind nachfolgend in Form einer Tabelle aufgeführt, wobei jeder Schaltpunkt mit einem Schaltpunkt-Markierungssignalwert «H» gekennzeichnet wird.

| | | $+x_i$ | $-x_i$ | $+y_i$ | $-y_i$ | $+x_i/+y_i$ | $+x_i/-y_i$ | $-x_i/+y_i$ | $-x_i/-y_i$ |
|---|---|---|---|---|---|---|---|---|---|
| | $+x_i$ | L | H | L | H | L | H | L | H |
| | $-x_i$ | H | L | H | L | H | L | H | L |
| | $+y_i$ | H | L | H | L | H | L | H | L |
| n-Interpolationsschritt | $-y_i$ | L | H | L | H | L | H | L | H |
| | $+x_i/+y_i$ | H | L | H | L | H | L | H | L |
| | $+x_i/-y_i$ | L | H | L | H | L | H | L | H |
| | $-x_i/+y_i$ | H | L | H | L | H | L | H | L |
| | $-x_i/-y_i$ | L | H | L | H | L | H | L | H |

(n+l) Interpolationsschritt

Wird ein Bildpunkt als Schaltpunkt erkannt, gibt der Festwert-Speicher 86 bzw. die Auswerte-Stufe 61 auf einer Leitung 87 ein entsprechendes Schaltpunkt-Markierungssignal ab.

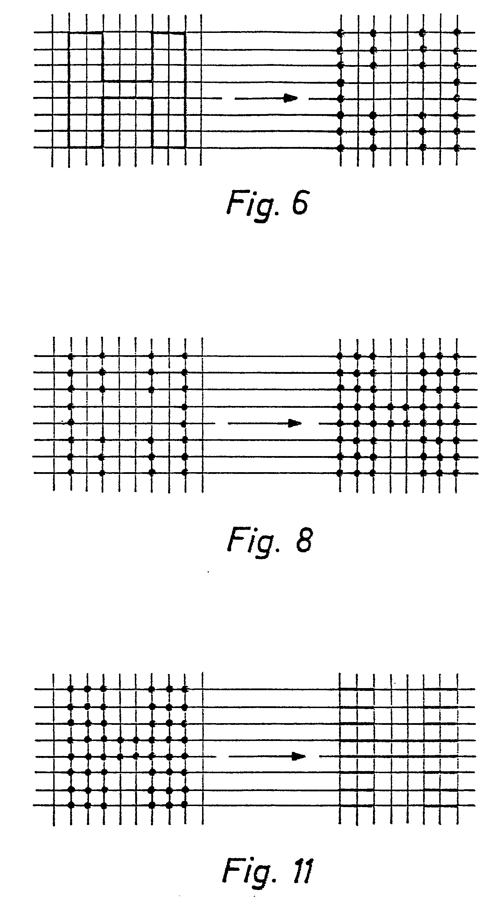

Fig. 5 soll die Bestimmung der Schaltpunkte verdeutlichen. Durch Interpolationsschritte $\pm x_i$ und $\pm y_i$ entlang eines Geradenabschnittes 74 zwischen einem Startpunkt 75 mit den Koordinaten $x'_0$ und $y'_0$ und einem Endpunkt 76 mit den Koordinaten $x'_0 + \Delta x$ und $y'_0 + \Delta y$ werden diejenigen Bildpunkte 77 im Aufzeichnungsraster 78 festgestellt, welche den Geradenabschnitt 74 möglichst gut annähern. Die in der Auswerte-Stufe 61 als Schaltpunkte markierten Bildpunkte 77 sind in der Fig. 5 durch stärkere Punkte hervorgehoben.

Damit sind sämtliche Schaltpunkte eines Schriftzeichens festgestellt.

In einem vierten Verfahrensschritt wird in der Schaltpunkt-Speichereinrichtung 62 durch Einschreiben der Schaltpunkt-Markierungssignalwerte «H» der relevanten Schaltpunkte eines Schriftzeichens auf die entsprechenden Speicherplätze ein Schaltpunkt-Bild des Schriftzeichens aufgebaut, wobei je nach Position des Schriftzeichens in bezug auf die aktuelle Position des Belichtungs-Fensters 200 bzw. des Such-Fensters 202 (Fig. 2) das Schaltpunkt-Bild eines ganzen Schriftzeichens oder eines Zeichenabschnittes entsteht, nämlich desjenigen Zeichenabschnitts, der jeweils in das Belichtungs-Fenster 200 bzw. Such-Fenster 202 hineinragt.

In Fig. 6 ist ein solches Schaltpunkt-Bild (rechts) für den Buchstaben «H» (links) dargestellt.

Den Speicherplätzen der Schaltpunkt-Speichereinrichtung 62 ist ein $\overline{XY}$-Koordinatensystem zugeordnet, so daß jeder Speicherplatz durch Koordinatenwerte $\overline{x}$ und $\overline{y}$ adressierbar ist. Die Schaltpunkt-Speichereinrichtung 62 hat eine «Breite», die von der Zeichengröße und der Zeichendrehung abhängig ist, und die «Höhe» des Belichtungs-Fensters 200 bzw. Such-Fensters 202 entspricht q Speicherzeilen $\overline{y}_0$ bis $\overline{y}_{q-1}$.

Im einfachsten Fall ist die Schaltpunkt-Speichereinrichtung 62 als Bit-Map-Speicher organisiert, d.h. jedem Speicherplatz ist ein Bildpunkt bzw. Schaltpunkt des Schriftzeichen-Gevierts zugeordnet, der durch die entsprechenden Koordinatenwerte adressierbar ist. In einer bevorzugten Ausführungsform zur Einsparung von Speicherkapazität ist unter jeder Adresse ein 16-Bit-Datenwort speicherbar. Dabei ist die Zuordnung von Bildpunkten bzw. Schaltpunkten und Adressen so, daß jedes 16-Bit-Datenwort ein Feld von $4 \times 4$ Bildpunkten bzw. Schaltpunkten darstellt. Die zum Markieren der Schaltpunkte eines Schriftzeichens oder Zeichenabschnitts erforderlichen Schreib-Adressen $\overline{x}_{Sn}$ und $\overline{y}_{Sn}$ für die Schaltpunkt-Speichereinrichtung 62 im $\overline{XY}$-Koordinatensystem ergeben sich gemäß Gleichung (2) aus den Bildpunkt-Koordinaten $x^*$ und $y^*$ im XY-Koordinatensystem nach Gleichung (1) und aus der Position des Schriftzeichens oder Zeichenabschnitts in bezug auf die aktuelle Position des Belichtungs-Fensters 200 oder des Such-Fensters 202 im UV-Koordinatensystem.

$$\overline{x}_{Sn} = x_0' + \sum_1^n x_i$$
$$\overline{y}_{Sn} = v_G - v_F - y_0' - \sum_1^n y_i \qquad (2)$$

Dabei stellen die Koordinatenwerte $x'_0$ und $v_G - v_F - y'_0$ die jeweiligen Start-Adressen für das betreffende Schriftzeichen oder den betreffenden Zeichenabschnitt in der Schaltpunkt-Speichereinrichtung 62 dar.

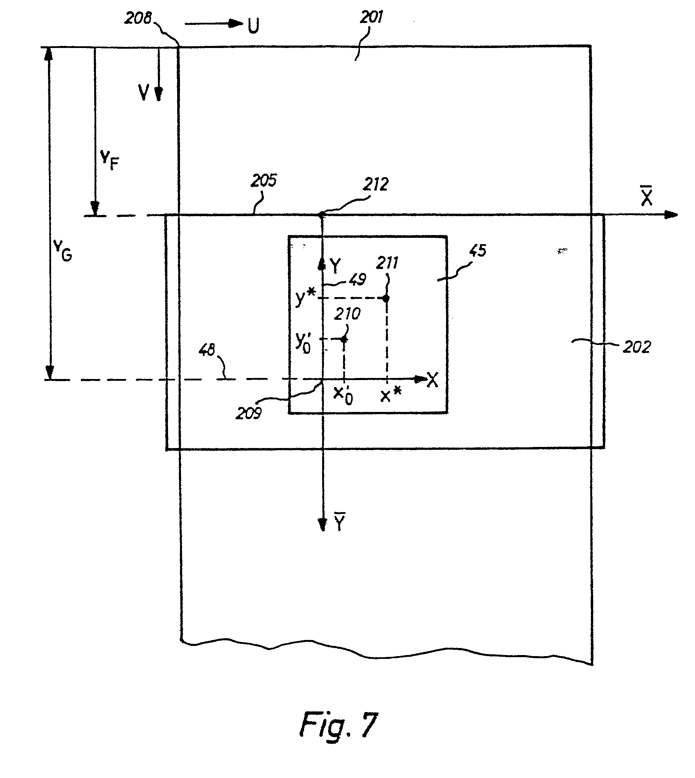

Die geometrischen Zusammenhänge sind in der grafischen Darstellung der Fig. 7 verdeutlicht. Fig. 7 zeigt den Layout-Plan 201 mit den Such-Fenster 202 im UV-Koordinatensystem mit dem Ursprung 208. Das Such-Fenster 202 hat den Positionswert $v_F$. Im Such-Fenster 202 ist ein Schriftzeichen-Geviert 45 und dessen XY-Koordinatensystem 49 (Fig. 3) mit dem Ursprung 209 dargestellt. Der Punkt 210 stellt einen Startpunkt auf einer Kontur mit den Koordinatenwerten $x'_0$ und $y'_0$ und der Punkt 211 einen interpolierten Bildpunkt mit den Bildpunkt-Koordinaten $x^*$ und $y^*$ dar, wobei

$$x^* = x'_0 + \sum_1^n x_i \quad \text{und} \quad y^* = y'_0 + \sum_1^n y_i$$

ist. Der Wert $v_G$ stellt den Koordinatenwert der Schriftgrundlinie 48 des Schriftzeichen-Gevierts 45 im UV-Koordinatensystem dar. Eingetragen ist außerdem das der Schaltpunkt-Speichereinrichtung 62 zugeordnete $\overline{XY}$-Koordinatensystem mit dem Ursprung 212. Die $\overline{X}$-Achse des $\overline{XY}$-Koordinatensystems fällt mit der Oberkante 205 des Such-Fensters 202 zusammen. Während das auf den Layout-Plan 201 bzw. auf die Ganzseite 29 bezogene UV-Koordinatensystem ortsfest ist, verschiebt sich das $\overline{XY}$-Koordinatensystem mit dem Such-Fenster 202 bzw. dem Belichtungs-Fenster 200.

Die sich aus den Gleichungen (2) ergebenen Werte $\overline{y}_{Sn}$ werden noch auf $\overline{y}_0 > \overline{y}_{Sn} > \overline{y}_{q-1}$ überwacht und nur dann als Schreib-Adressen für die Schaltpunkt-Speichereinrichtung 62 akzeptiert, wenn die berechneten Werte $\overline{y}_{Sn}$ innerhalb der Grenzwerte $\overline{y}_0$ und $\overline{y}_{q-1}$ liegen, welche die Höhe der Schaltpunkt-Speichereinrichtung 62 bzw. die Höhe des Such-Fensters 202 definieren. Durch diese Überwachung wird in vorteilhafter Weise erreicht, daß von den festgestellten Schaltpunkten eines ganzen Schrifzeichens gegebenenfalls nur diejenigen Schaltpunkte in die Schaltpunkt-Speichereinrichtung 62 übernommen werden, die zu einem in das Such-Fenster 202 hineinragenden Zeichenteil gehören, wodurch eine schnelle Speicherfüllung erreicht wird.

Der Aufbau der Schaltpunkt-Speichereinrichtung 62 wird nachfolgend im einzelnen näher beschrieben.

Die Schaltpunkt-Speichereinrichtung 62 weist einen Speicher mit zwei getrennten Speicherbereichen oder wie im Ausführungsbeispiel zwei einzelne Teilspeicher 88 und 88' mit Adressen-Eingängen 89 und 89', Daten-Eingängen 90 und 90' und Daten-Ausgängen 91 und 91' auf. Die Teilspeicher 88 und 88' arbeiten ebenfalls im Wechselbetrieb, d.h. während die Schaltpunkt-Markierungssignale der in der Auswerte-Stufe 61 festgestellten Schaltpunkte eines Schriftzeichens in einen Teilspeicher eingeschrieben werden, werden die zuvor in den anderen Teilspeicher eingeschriebenen Schaltpunkt-Markierungssignale des vorangegangenen Schriftzeichens bereits aus diesem ausgelesen und in die Video-Speichereinrichtung 17 überschrieben.

Jedem Teilspeicher 88 und 88' ist ein Speicher-Steuerwerk 93 bzw. 93' und ein Multiplexer 94 bzw. 94' zugeordnet. Mit Hilfe der Multiplexer 94 und 94' werden in Abhängigkeit der momentanen Betriebsart der Teilspeicher die Schreib-Adressen $\bar{x}_{Sn}$ und $\bar{y}_{Sn}$ auf einer Adreß-Leitung 95 oder die Lese-Adressen $\bar{x}_L$ und $\bar{y}_L$ auf einer Adreß-Leitung 96 über die Adreß-Leitung 97 oder 97' zu den betreffenden Speicher-Steuerwerken 93 bzw. 93' und von dort über Adreß-Leitungen 98 oder 98' auf die Adreß-Eingänge 89 oder 89' der Teilspeicher 88 oder 88' durchgeschaltet. Die Daten-Ausgänge 91 und 91' der Teilspeicher 88 und 88' werden mit Hilfe eines weiteren Multiplexers 99 in Abhängigkeit vom Schreib- oder Lese-Betrieb der Teilspeicher 88 und 88' auf die Datenleitung 16 durchgeschaltet. Da ein Betriebswechsel der Teilspeicher 88 und 88' jeweils nach der Bestimmung der Schaltpunkte eines Schriftzeichens stattfindet, werden die Multiplexer 94, 94' und 99 durch das Signal «Zeichenende» auf der Leitung 71 umgeschaltet, vorausgesetzt das Auslesen des anderen Teilspeichers ist schon beendet. Andernfalls erfolgt die Umschaltung nach Beendigung des Auslesens.

Die Teilspeicher 88 und 88' sind beispielsweise aus dynamischen RAM-Bausteinen aufgebaut.

Die Schreib-Adressen $\bar{x}_{Sn}$ und $\bar{y}_{Sn}$ für die Schaltpunkt-Speichereinrichtung 62 auf der Adreß-Leitung 95 werden gemäß den Gleichungen (2) in einem X-Adreßzähler 101 und einem Y-Adreßzähler 102, welche als Vorwärts/Rückwärts-Zähler ausgebildet sind, gewonnen.

Dazu werden die in der Transformations-Stufe 58 berechneten Startpunkt-Koordinaten $x'_0$ über eine Daten-Leitung 100 an den Übernahme-Eingang 103 des X-Adreßzählers 101 und die Startpunkt-Koordinaten $y'_0$ sowie die Koordinatenwerte, welche die Lage des betreffenden Zeichens zum Such-Fenster 202 kennzeichnen, über die Daten-Leitung 100 an den Übernahme-Eingang 104 des Y-Adreßzählers 102 gegeben.

Die Takteingänge 105 und 106 des X-Adreßzählers 101 und des Y-Adreßzählers 102 sind über Leitungen 107 und 108 mit der Interpolations-Stufe 60 verbunden. Über die Leitungen 107 und 108 werden die in der Interpolations-Stufe 60 ausgeführten Interpolationsschritte $\pm x_i$ und $\pm y_i$ entsprechend ihren Vorzeichen in die Adreßzähler 101 und 102 eingezählt oder aus ihnen ausgezählt. Der Zählerstand des X-Adreßzählers 101 bildet direkt die Schreib-Adresse $\bar{x}_{Sn}$ der jeweils aufzurufenden Speicherplätze in den Teilspeichern 88 oder 88'. Der Y-Adreßzähler 102 enthält eine zusätzliche Überwachungseinrichtung, durch die der aktuelle Zählerstand des Y-Adreßzählers 102 nur dann als Schreib-Adresse $\bar{y}_{Sn}$ weitergeleitet

wird, wenn der Zählerstand zwischen den zuvor erläuterten Grenzwerten $\bar{y}_0$ und $\bar{y}_{q-1}$ liegt.

Wenn die Auswerte-Stufe 61 einen Bildpunkt als Schaltpunkt erkannt hat, wird das Schaltpunkt-Markierungssignal vom Ausgang der Auswerte-Stufe 61 über die Leitung 87 und einen der Multiplexer 94 oder 94' an dasjenige Speicher-Steuerwerk 93 oder 93' gegeben, das sich momentan im Schreib-Betrieb befindet und dort in einen Schreibbefehl auf einer Leitung 109 umgesetzt. Aufgrund des Schreibbefehls wird unter der momentan aufgerufenen Schreib-Adresse $\bar{x}_{Sn}$ und $\bar{y}_{Sn}$ mit Hilfe einer Steuer-Stufe 110, welche mit den Daten-Eingängen 90 und 90' der Teilspeicher 88 und 88' verbunden ist, in den im Schreib-Betrieb befindlichen Teilspeicher 88 oder 88' ein logisches «H» als Schaltpunkt-Markierungssignal für den betreffenden Schaltpunkt abgelegt. Auf diese Weise werden sämtliche Schaltpunkte eines Schriftzeichens oder Zeichenabschnittes in dem betreffenden Teilspeicher 88 oder 88' markiert bis der betreffende Teilspeicher 88 oder 88' durch das Signal «Zeichenende» auf der Leitung 71 auf Lese-Betrieb umgeschaltet wird. Sowohl das Schreiben als auch das Lesen läuft in Read/Modify/Write-Zyklen ab. Beim Schreiben wird in der Steuer-Stufe 110 eine EX/OR-Verknüpfung zwischen den schon gespeicherten und den einzuschreibenden Daten gebildet.

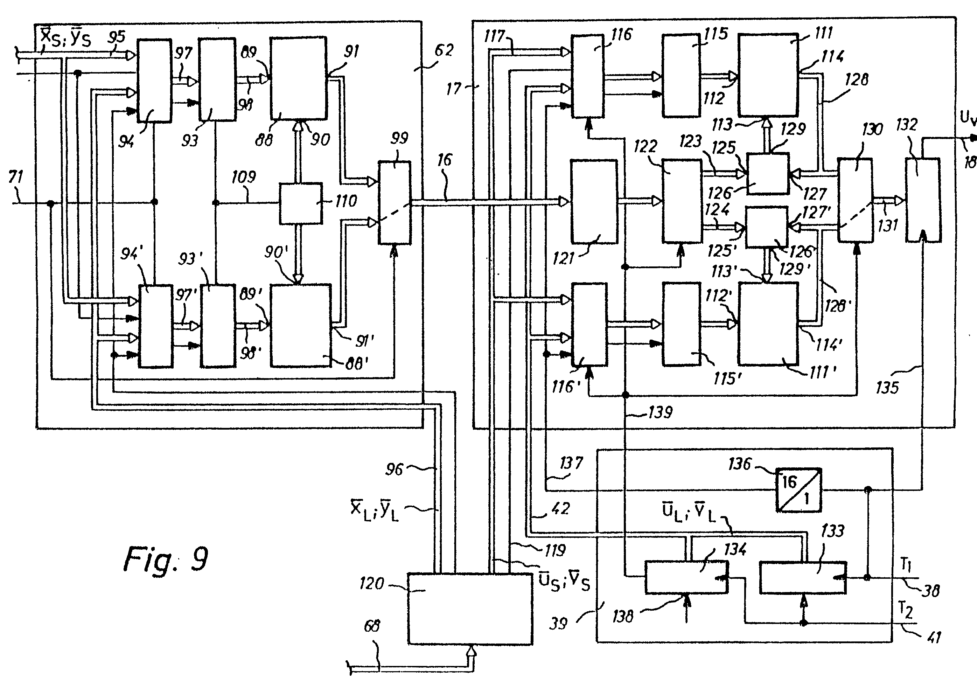

In einem fünften Verfahrensschritt werden nacheinander die in der Schaltpunkt-Speichereinrichtung 62 jeweils für ein Schriftzeichen oder einen Zeichenteil abgelegten Schaltpunkt-Bilder Zeile für Zeile in die Video-Speichereinrichtung 17 transferiert und dort jeweils auf denjenigen Speicherpositionen abgelegt, welche den Positionen des betreffenden Schriftzeichens oder Zeichenteils in der Textzeile bzw. in der Bildlinie 36 auf dem Aufzeichnungsmedium 29 entsprechen, bis die Schaltpunkt-Bilder sämtlicher Schriftzeichen der betreffenden Bildlinien überschrieben sind. Gleichzeitig werden die aus der Schaltpunkt-Speichereinrichtung 62 überschriebenen Schaltpunkt-Bilder, welche nur die Schaltpunkte der äußeren und inneren Konturen der Zeichen enthalten (Fig. 6), dahingehend ergänzt, daß nunmehr alle zwischen den Vorderkanten und Hinterkanten der Schwarzbildabschnitte der Schriftzeichen liegenden Bildpunkte in der Video-Speichereinrichtung 17 mit Videodaten «H» gekennzeichnet werden. Diesen Vorgang zeigt Fig. 8, wobei links das in der Schaltpunkt-Speichereinrichtung 62 gespeicherte Schaltpunkt-Bild und rechts das in der Video-Speichereinrichtung 17 abgelegte, aufgefüllte Schaltpunkt-Bild dargestellt ist.

Fig. 9 zeigt ein Ausführungsbeispiel für die Video-Speichereinrichtung 17. Da die bereits in Fig. 4 ausführlich erläuterte Schaltpunkt-Speichereinrichtung 62 in Wirkverbindung mit der Video-Speichereinrichtung 17 steht, wurde die Schaltpunkt-Speichereinrichtung 62 in der Fig. 9 zum besseren Verständnis noch einmal dargestellt.

Den Speicherplätzen der Video-Speichereinrichtung 17 ist ein $\overline{UV}$-Koordinatensystem zuge-

ordnet, so daß jeder Speicherplatz durch Koordinatenwerte $\bar{u}$ und $\bar{v}$ adressierbar ist.

Die Video-Speichereinrichtung 17 ist in einer bevorzugten Ausführungsform ebenfalls als Wechselspeicher mit zwei Teilspeichern 111 und 111' ausgebildet. Während die Schaltpunkt-Markierungssignale aus der Schaltpunkt-Speichereinrichtung 62 in einen der Teilspeicher 111 oder 111' eingeschrieben werden, werden die Videodaten als Steuersignal aus dem anderen Teilspeicher ausgelesen und der Belichtungseinheit 2 zugeführt.

Die Teilspeicher 111 und 111' sind z.B. ebenfalls aus dynamischen RAM-Bausteinen aufgebaut. Jeder Teilspeicher 111 und 111' hat die Breite einer vollen Bildlinie 36 der Ganzseite 29 mit p Bildpunkten pro Bildlinie und eine Höhe von q Speicherzeilen $\bar{v}_0$ bis $\bar{v}_{q-1}$, die der Höhe der Schaltpunkt-Speichereinrichtung 62 und der Höhe des Belichtungs-Fensters 200 mit q Bildlinien entspricht. In jedem Teilspeicher 111 und 111' sind somit die Schaltpunkt-Markierungssignale für p · q Bildpunkte speicherbar.

Im einfachsten Fall sind die Teilspeicher 111 und 111' ebenfalls als Bit-Map-Speicher ausgebildet.

In einer bevorzugten Ausführungsform ist unter jeder Adresse eines Teilspeichers 111 und 111' ein 16-Bit-Datenwort speicherbar, welches die Videodaten von 16 auf einer Bildlinie nebeneinanderliegenden Bildpunkten enthält.

Den Teilspeichern 111 und 111' mit Adreß-Eingängen 112 und 112', Daten-Eingängen 113 und 113' und Daten-Ausgängen 114 und 114' sind Speicher-Steuerwerke 115 bzw. 115' sowie Multiplexer 116 bzw. 116' zugeordnet. Mit Hilfe der Multiplexer 116 und 116' werden je nach momentaner Betriebsart der Teilspeicher 111 und 111' die Schreib-Adressen $\bar{u}_s$ und $\bar{v}_s$ auf einer Adreß-Leitung 117 oder die Lese-Adressen $\bar{u}_L$ und $\bar{v}_L$, die in der Synchronisier-Stufe 39 erzeugt werden, über die Adreß-Leitung 42 und die Multiplexer 116 und 116' auf das entsprechende Speicher-Steuerwerk 115 oder 115' geschaltet.

Die zum Überschreiben der Schaltpunkt-Bilder aus der Schaltpunkt-Speichereinrichtung 62 in die Video-Speichereinrichtung 17 benötigten Lese-Adressen $\bar{x}_L$ und $\bar{y}_L$ für die Schaltpunkt-Speichereinrichtung 62 auf der Adreß-Leitung 96 und die Schreib-Adressen $\bar{u}_s$ und $\bar{v}_s$ für die Video-Speichereinrichtung 17 auf der Adreß-Leitung 117 sowie die zugehörigen Lese- und Schreibbefehle auf Leitungen 118 und 119 werden in einem Adreß-Steuerwerk 120 gebildet.

Das Adreß-Steuerwerk 120 erzeigt die Lese-Adressen $\bar{x}_L$ und $\bar{y}_L$ für die Schaltpunkt-Speichereinrichtung 62 derart, daß die Speicherplätze Speicherzeile für Speicherzeile und innerhalb jeder Speicherzeile Bildpunkt für Bildpunkt aufgerufen werden, wobei nur der der tatsächlichen Zeichenfläche 50 des Schriftzeichens (Fig. 3) entsprechende Adressen-Bereich aufgerufen wird. So werden nur diejenigen Speicherplätze abgefragt, auf denen tatsächlich Information abgespeichert ist, wodurch in vorteilhafter Weise die Zeit für das Überschreiben der Schaltpunkt-Bilder verringert wird. Zur Markierung des Adressen-Bereiches werden dem Adreß-Steuerwerk 120 die geänderten Längenwerte der Zeichenfläche 50 über die Daten-Leitung 68 zugeführt.

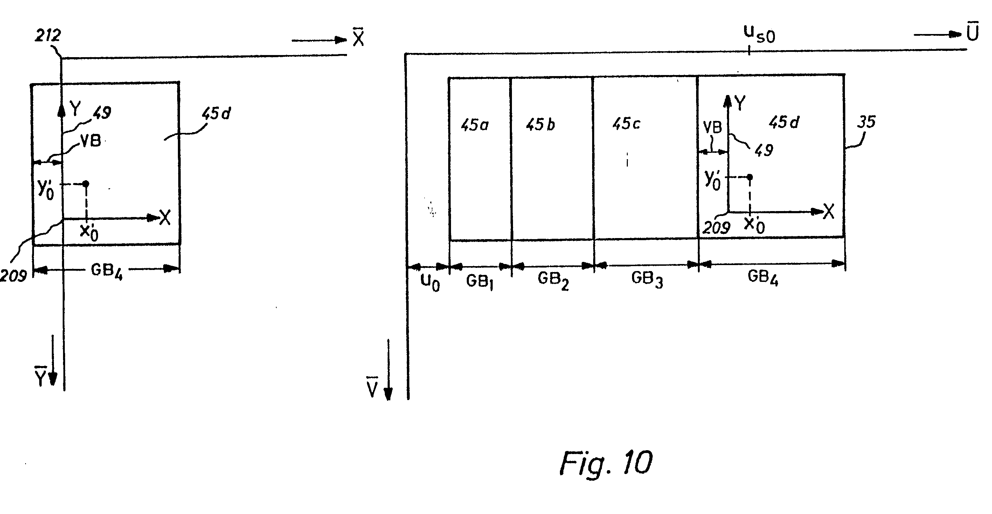

Die Berechnung der Schreib-Adressen $\bar{u}_s$ und $\bar{v}_s$ für die Video-Speichereinrichtung 17 wird anhand der grafischen Darstellung in Fig. 10 erläutert. Auf der linken Seite ist das XY-Koordinatensystem für die Schaltpunkt-Speichereinrichtung 62 angegeben, in dem ein Schriftzeichen-Geviert 45d angeordnet ist. Auf der rechten Seite ist das $\overline{UV}$-Koordinatensystem der Video-Speichereinrichtung 17 angedeutet. In die Video-Speichereinrichtung 17 wurden bereits die Schaltpunkt-Bilder für drei Schriftzeichen-Gevierte 45a, 45b und 45c einer Textzeile 35 eingeschrieben, das Schaltpunkt-Bild für ein viertes Schriftzeichen-Geviert 45d soll aus der Schaltpunkt-Speichereinrichtung 62 transferiert werden.

Die Start-Schreibadresse $\bar{u}_{s0}$ in U-Richtung (Bildlinienrichtung) ergibt sich dabei zu:

$$\bar{u}_{s0} = \bar{u}_0 + \Sigma GB + VB \qquad (3)$$

wobei $\bar{u}_0$ die Anfangskoordinate der Textzeile 35 auf der Ganzseite 29, $GB_1$, $GB_2$, $GB_3$ und $GB_4$ die jeweilige Gesamtbreite eines Schriftzeichen-Gevierts 45, $\Sigma GB$ die Summe der Gesamtbreiten aller bereits überschriebenen Schriftzeichen-Gevierte 45a, 45b und 45c, im Beispiel $\Sigma GB_1 + GB_2 + GB_3$, und VB die Vorbreite des momentan zu überschreibenden Schriftzeichen-Gevierts 45d ist. Aus der Start-Schreib-Adresse $\bar{u}_{s0}$ ergibt sich dann die laufende Schreib-Adresse $\bar{u}_s$ in U-Richtung zu:

$$\bar{u}_s = \bar{u}_{s0} + \bar{x}_L \qquad (4)$$

und die laufende Schreib-Adresse $\bar{v}_s$ in V-Richtung (senkrecht zur Bildlinienrichtung) ist dann:

$$\bar{v}_s = \bar{y}_L \qquad (5)$$

Die erforderlichen Werte werden dem Adreß-Steuerwerk 120 über die Daten-Leitung 68 zugeführt. Die aus dem im Lese-Betrieb befindlichen Teilspeicher 88 oder 88' über die Daten-Leitung 16 ausgelesenen Schaltpunkt-Markierungssignale werden in einer Codier-Stufe 121 entsprechend der unterschiedlichen Organisation der Schaltpunkt-Speichereinrichtung 62 und der Video-Speichereinrichtung 17 umcodiert und einem weiteren Multiplexer 122 zugeführt, der über Daten-Leitungen 123 und 124 mit den ersten Daten-Eingängen 125 und 125' von zwei Logik-Stufen 126 und 126' verbunden sind. Die zweiten Daten-Eingänge 127 und 127' der Logik-Stufen 126 und 126' sind über Daten-Leitungen 128 und 128' an die Daten-Ausgänge 114 und 114' der Teilspeicher 111 und 111' angeschlossen, während die Daten-Ausgänge 129 und 129' der Logik-Stufen 126 und 126' mit den Daten-Eingängen 113 und 113' der Teilspeicher 111 und 111' in Verbindung stehen. In den Logik-Stufen 126 und 126' können in vorteilhafter Weise die einzuschreibenden Daten mit den bereits in den Teilspeichern 111 und 111' abgelegten Daten logisch, z. B. durch eine ODER-Verknüpfung vereinigt und in die entsprechenden Teilspeicher 111 und 111' übernommen werden. In den Logik-Stufen 126 und 126' findet auch das bereits erläuterte Auffüllen der zwischen zwei Schaltpunkten liegenden Speicherplätze mit Videodaten «H» (Fig. 8) statt.

Die Daten-Ausgänge 114 und 114' der Teilspeicher 111 und 111' sind über die Daten-Leitungen 128 und 128' an einen weiteren Multiplexer 130 geführt, dessen Ausgang über eine Daten-Leitung 131 an einen Parallel/Serien-Wandler 132 angeschlossen ist. In dem Parallel/Serien-Wandler 132 wird jedes unter einer Teilspeicher-Adresse abgelegte 16-Bit-Datenwort seriell in 16 Videosignalwerte für 16 hintereinanderliegende Bildpunkte auf einer Bildlinie umgewandelt.

Das Auslesen der Videodaten als Videosignal $U_v$ für die Belichtungseinheit 2 aus dem im Lese-Betrieb befindlichen Teilspeicher 111 oder 111' wird von der Synchronisier-Stufe 39 gesteuert. Die über die Leitung 38 herangeführte Bildpunkt-Taktfolge $T_1$ wird in einen U-Adreßzähler 133 und die über die Leitung 41 gelieferten Takte $T_2$ «Bildlinienende» in einen V-Adreßzähler 134 eingezählt. Der U-Adreßzähler 133 wird jeweils von den Takten $T_2$ «Bildlinienende» zurückgesetzt. Die Zählerstände u und v der beiden Adreßzähler 133 und 134 geben die aktuelle Position des Lichtstrahls 20' auf dem Aufzeichnungsmedium 29 an. Die zum Auslesen der Videodaten aus der Video-Speichereinrichtung 17 benötigten Lese-Adressen $\overline{u}_L$ und $\overline{v}_L$ ergeben sich dann aus den Zählerständen u und v zu:

$$\overline{u}_L = u \qquad (6)$$
$$\overline{v}_L = v - v_F$$

wobei «$v_F$» wiederum die aktuelle Position des Belichtungs-Fensters 200 auf dem Aufzeichnungsmedium 29 angibt (Fig. 2a).

Die Lese-Adressen $\overline{u}_L$ und $\overline{v}_L$ für den im Lese-Betrieb befindlichen Teilspeicher 111 oder 111' werden über die Adreß-Leitung 42 an die Video-Speichereinrichtung 17 gegeben.

Die Bildpunkt-Taktfolge $T_1$ taktet über eine Leitung 135 den Parallel/Serien-Wandler 132, so daß dieser die Videosignale für die einzelnen aufzuzeichnenden Bildpunkte synchron mit der Aufzeichnung abgibt. Die Bildpunkt-Taktfolge $T_1$ wird in einer Teiler-Stufe 16 im Verhältnis 16:1 untersetzt, und die untersetzte Taktfolge bildet die Lesebefehle für den Teilspeicher 111 oder 111', die über eine Leitung 137 an die Video-Speichereinrichtung 116 weitergegeben werden. Der V-Adreßzähler 134 wird über einen Programmier-Eingang 138 auf die Anzahl q in den Teilspeichern 88 und 88' bzw. 111 und 111' speicherbaren Bildlinien voreingestellt. Der V-Adreßzähler 134 liefert jeweils nach der voreingestellten Anzahl q von Bildlinien ein Signal «Speicherwechsel», welches über eine Leitung 139 an die Multiplexer 116, 116', 123 und 130 gegeben wird, um die Teilspeicher 111 und 111' vom Schreib-Betrieb in den Lese-Betrieb oder umgekehrt umzuschalten.

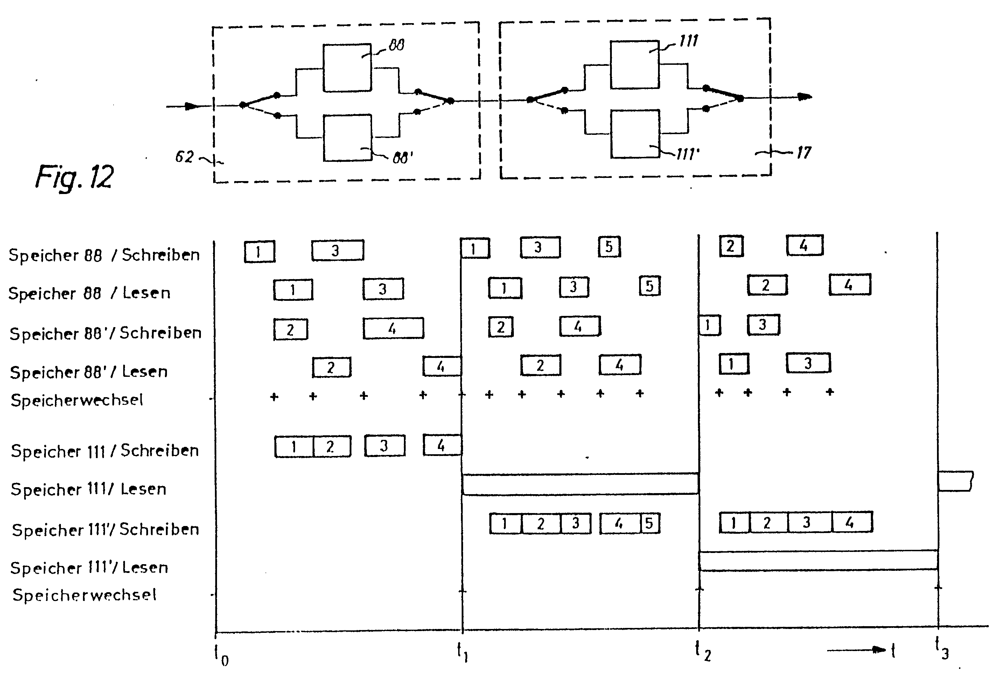

Fig. 11 zeigt als Beispiel die bildlinienweise Aufzeichnung des Buchstabens «H» (rechts) auf dem Aufzeichnungsmedium 29 aus dem in der Video-Speichereinrichtung 17 abgelegten Schaltpunkt-Bild dieses Buchstabens (links).

Fig. 12 zeigt ein Zeitdiagramm zur Erläuterung der Zeitabläufe beim Schreib- und Lesebetrieb der Schaltpunkt-Speichereinrichtung 62 in Verbindung mit der Video-Speichereinrichtung 17.

Zum besseren Verständnis sind in Fig. 12 zunächst noch einmal prinzipiell die beiden im Wechselbetrieb arbeitenden Teilspeicher 88 und 88' der Schaltpunkt-Speichereinrichtung 62 sowie die ebenfalls im Wechselbetrieb arbeitenden Teilspeicher 111 und 111' der Video-Speichereinrichtung 17 nach Fig. 9 dargestellt, wobei die Multiplexer als mechanische Schalter symbolisiert sind.

In einem ersten Zeitintervall von $t_0$ bis $t_1$ werden die Schaltpunkt-Markierungssignale von beispielsweise vier Schriftzeichen für eine erste Position des Belichtungs-Fensters 200 auf dem Aufzeichnungsmedium 29 aufbereitet, indem zunächst die Schaltpunkt-Markierungssignale des ersten Schriftzeichens in den Teilspeicher 88 eingeschrieben werden. Die Länge der dargestellten Kästchen entspricht der für den Vorgang benötigten Zeitdauer, und die in die Kästchen eingetragenen Ziffern geben einen Hinweis, welche Schriftzeichen gerade aufbereitet werden.

Nach Beendigung des Schreibvorganges für das erste Schriftzeichen werden bereits die Schaltpunkt-Markierungssignale des zweiten Schriftzeichens in den Teilspeicher 88' eingeschrieben. Während der Einschreibzeit werden die Schaltpunkt-Markierungssignale des ersten Schriftzeichens bereits aus dem Teilspeicher 88 ausgelesen und in den Teilspeicher 111 der Video-Speichereinrichtung 17 eingeschrieben. Ist das Lesen der Schaltpunkt-Markierungssignale des ersten Schriftzeichens aus dem Teilspeicher 88 beendet, werden auch schon die Schaltpunkt-Markierungssignale des zweiten Schriftzeichens aus dem Teilspeicher 88' in den Teilspeicher 111 der Video-Speichereinrichtung 17 überschrieben. Dieser Vorgang wiederholt sich so lange, bis die Schaltpunkt-Markierungssignale aller vier Schriftzeichen in dem Teilspeicher 111 der Video-Speichereinrichtung 17 abgelegt sind.

Die erforderliche Anzahl von Wechseln der Teilspeicher 88 und 88' in der Schaltpunkt-Speichereinrichtung 62 entspricht der Anzahl der aufbereiteten Schriftzeichen, wobei die Speicherwechsel in der Figur durch Kreuze markiert sind.

In einem zweiten Zeitintervall von $t_1$ bis $t_2$ werden die Schaltpunkt-Markierungssignale von beispielsweise fünf Schriftzeichen für eine zweite Position des Belichtungs-Fensters 200 aufbereitet und im Wechsel aus den Teilspeichern 88 und 88' in den Teilspeicher 111' der Video-Speichereinrichtung 17 überschrieben, während die Schaltpunkt-Markierungssignale für die erste Position des Belichtungs-Fensters 200 aus dem Teilspeicher 111 der Video-Speichereinrichtung 17 ausgelesen und aufgezeichnet werden.

In einem dritten Zeitintervall von $t_2$ bis $t_3$ werden die Schaltpunkt-Markierungssignale von beispielsweise drei Schriftzeichen für eine dritte Position des Belichtungs-Fensters 200 aufbereitet und in den Teilspeicher 111 der Video-Speichereinrichtung 17 überschrieben, während der Speicherinhalt aus dem Teilspeicher 111' der Video-Speichereinrichtung 17 ausgelesen und aufgezeichnet wird. Ein Speicherwechsel für die Teilspeicher 111 und 111' der Video-Speichereinrichtung 17 erfolgt jeweils bei einer neuen Position des Belichtungs-Fensters 200.

Dabei ist die zeitliche Steuerung der Schreib- und Lesevorgänge so getroffen, daß die zum Einschreiben der Schaltpunkt-Markierungssignale aus der Schaltpunkt-Speichereinrichtung 62 in einen Teilspeicher der Video-Speichereinrichtung 17 benötigte Zeit kleiner ist als die von der Geschwindigkeit der Belichtung abhängigen Auslesezeit des anderen Teilspeichers der Video-Speichereinrichtung 17.

Fig. 13 zeigt ein Ausführungsbeispiel für die Interpolations-Stufe 60 für lineare und zirkulare Interpolation. Die Interpolations-Stufe 60 besteht im wesentlichen aus einem X-Zähler 145, einem Y-Zähler 146, einem $F_x$-Addierer/Subtrahierer 147, einem $F_y$-Addierer/Subtrahierer 148, einem Vergleicher 149, zwei Inkrement-Stufen 150 und 151, einem $F_x$-Register 152, einem $F_y$-Register 153, einem Multiplexer 154, einem Speicherregister 155 sowie einer Steuer- und Logik-Stufe 156.

Zur Theorie über die Interpolationen von Linien und Kreisbögen wird auf folgende Literaturstellen verwiesen:

1. «An improved algorithm for the generation of non parametric curves», IEEE transactions on computers, Vo. c-22, No. 12, December 1973, Seiten 1052 bis 1060; und

2. «High-Speed algorithm for the generation of straight lines and circular arcs», IEEE transactions of computers, Vol. c-28, No. 10, October 1979, Seiten 728 bis 736.

Die Wirkungsweise der Interpolations-Stufe 60 wird am Beispiel einer linearen Interpolation (Ilin) entlang eines Geradenabschnitts 74 nach Fig. 5 erläutert. Dazu wird zunächst der Steuer- und Logik-Stufe 156 über die Leitung 66 der Befehl zur linearen Interpolation (Ilin) gegeben. Die in der Rechen-Stufe 59 (Fig. 4) in Zweier-Komplement-Darstellung berechneten Koordinaten-Differenzwerte x und y des betreffenden Geradenabschitts 74 zwischen dem Startpunkt 75 und dem Endpunkt 76 und die entsprechenden Vorzeichen ($x_s$ und $y_s$) werden über die Leitung 69 in den X-Zähler 145 und den Y-Zähler 146 geladen. Von diesen gelangen die Vorzeichen ($x_s$; $y_s$) in die Steuer- und Logik-Stufe 156, welche entsprechende Befehle ($+/-F_x$; $+/-F_y$) an die Addierer/Subtrahierer 147 und 148 gibt, durch welche diese auf Addition bzw. Subtraktion umgeschaltet werden. Je nach Vorzeichen ($x_s$; $y_s$) der Koordinaten-Differenzwerte $\Delta x$ und $\Delta y$ ist einer der vier Quadranten gekennzeichnet. Gleichzeitig wird das $F_x$-Register 152 und das

$F_y$-Register 153 gelöscht, so daß der Fehlerwert $F_n$ = 0 ist.

Nach dieser Voreinstellung werden die Interpolationsfehler $F_{xn+1}$ und $F_{yn+1}$ berechnet. Die Fehlerberechnung erfolgt abhängig vom gekennzeichneten Quadranten durch Addition oder Subtraktion von $\Delta x$ und $\Delta y$ zum Fehlerwert $F_n$ gemäß $F_{xn+1} = F_n \pm \Delta x$ und $F_{yn+1} = F_n \pm \Delta y$. Die Steuerung ist immer so getroffen, daß eine der beiden Berechnungen den Fehlerwert $F_n$ erhöht, die andere ihn verringert. Im ersten Quadranten ist z.B. der eine Addierer/Subtrahierer auf Addier-Betrieb und der andere Addierer/Subtrahierer auf Subtrahier-Betrieb eingestellt. Die in den beiden Addierern/Subtrahierern 147 und 148 gebildeten Fehlerwerte $F_{xn+1}$ und $F_{yn+1}$ werden über die Inkrement-Stufen 150 und 151, welche bei linearer Interpolation nicht benötigt werden, in das $F_x$-Register 152 und in das $F_y$-Register 153 geladen und dort zwischengespeichert. Die Beträge der Fehlerwerte $|F_{xn+1}|$ und $|F_{yn+1}|$ werden jeweils in dem Vergleicher 149 miteinander verglichen. Anhand des Vergleichsergebnisses, welches der Steuer- und Logik-Stufe 156 über eine Leitung 157 zugeführt wird, wird in der Steuer- und Logik-Stufe 156 darüber entschieden, ob ein Interpolationsschritt ($\pm x_i$; $\pm y_i$) in X- oder Y-Richtung und mit welchem Vorzeichen durchgeführt wird, wobei der entsprechende Interpolationsschritt immer in Richtung des größten Fehlerwertes ausgeführt wird. Anhand des Vergleichs der Fehlerwerte wird außerdem in der Steuer-Logik-Stufe 156 festgelegt, welcher der beiden Fehlerwerte $F_{xn+1}$ bzw. $F_{yn+1}$ den Fehlerwert $F_n$ für den nächsten Zyklus repräsentieren soll. Dabei ist die Festlegung so getroffen, daß immer der kleinste Fehlerwert $F_{xn+1}$ oder $F_{yn+1}$ als neuer Fehlerwert $F_n$ ausgewählt wird. Die Auswahl des kleinsten Fehlerwertes erfolgt mit Hilfe des Multiplexers 154, der von einem in der Steuer- und Logik-Stufe 156 erzeugten und in einem Speicher-Register 155 zwischengespeicherten Auswahl-Befehl ($F_{sel}$) auf einer Leitung 158 entsprechend umgeschaltet wird. Die ausgeführten Interpolationsschritte ($\pm x_i$; $\pm y_i$) werden über die Leitungen 72 und 73 in den X-Adreßzähler 101 und den Y-Adreßzähler 102 (Fig. 4) eingezählt und dort, wie bereits ausführlich erläutert, zur Adressen-Berechnung für die Schaltpunkt-Speichereinrichtung 62 verwendet. Da die Adreß-Zähler 101 und 102 nicht Bestandteil der Interpolations-Stufe 60 sind, wurden diese in der Figur nur gestrichelt angedeutet.

Zur Erzeugung des Befehls «Abschnittsende» am Endpunkt 76 des Geradenabschnitts 75 (Fig. 5) werden zunächst die Koordinatendifferenzwerte $\Delta x$ und $\Delta y$ des betreffenden Geradenabschnitts über Programmier-Eingänge 159 und 160 in einen X-Längenzähler 161 und einen Y-Längenzähler 162 geladen. Die ausgeführten Interpolationsschritte ($\pm x_i$; $\pm y_i$) werden je nach Vorzeichen in die Längenzähler 161 und 162 eingezählt oder aus ihnen ausgezählt. Die aktuellen Zählerstände der Längenzähler 161 und 162 werden in einer Überwachungs-Stufe 163 auf den Zählerstand «Null» überwacht. Sind beide Zählerstände «Null», ist der Endpunkt 76 des Geradenabschnittes 74 erreicht, und die Überwachungs-Stufe 163 gibt den Befehl «Abschnittsende» auf der Leitung 70 ab.

**Patentansprüche**

1. Verfahren zum bildpunkt- und bildlinienweisen Aufzeichnen von Zeichen, insbesondere von Schriftzeichen, auf einer Aufzeichnungsseite beim elektronischen Lichtsatz, bei dem die zum Aufzeichnen benötigten Zeichendaten und Positionsdaten von Setzanweisungen darstellenden Textdaten aufgerufen und in ein Steuersignal für ein relativ zur Aufzeichnungsseite bewegliches Aufzeichnungsorgan umgesetzt werden, und bei dem

a) vor der Aufzeichnung jede geschlossene Kontur eines Zeichens, ausgehend von einem Startpunkt auf jeder Kontur, durch in einer Umlaufrichtung um die Kontur aufeinanderfolgende Konturabschnitte beschrieben und die Koordinaten $(x, y)$ der Konturabschnitt-Endpunkte und die Startpunkt-Koordinaten $(x_0; y_0)$ in einem Codierungsraster eines auf das Zeichen-Geviert bezogenen Koordinatensystems (XY) bestimmt und als codierte Zeichendaten einer Zeichengröße gespeichert wird, bei der Aufzeichnung

b) die Startpunkt-Koordinaten $(x_0; y_0)$ für jede Kontur und die Koordinaten $(x; y)$ der Konturabschnitt-Endpunkte eines Zeichens oder Zeichenabschnitts um einen Größenfaktor verändert werden, der sich aus der aufzuzeichnenden Zeichengröße und dem Verhältnis zwischen dem Codierungsraster und einem gewünschten Aufzeichnungsraster ergibt,

c) für jeden aufeinanderfolgenden Konturabschnitt eines Zeichens oder Zeichenabschnitts aus den um den Größenfaktor geänderten Startpunkt-Koordinaten $(x'_0; y'_0)$ und aus der Summe der zwischen den Konturabschnitt-Endpunkten im Aufzeichnungsraster ausgeführten Interpolationsschritte $(x_i; y_i)$ die Bildpunkt-Koordinaten $(x^*; y^*)$ derjenigen Bildpunkte im Aufzeichnungsraster nach den Gleichungen:

$$x^* = x'_0 + \Sigma x_i$$
$$y^* = y'_0 + \Sigma y_i$$

festgestellt werden, welche den betreffenden Konturabschnitt möglichst gut annähern,

d) aufeinanderfolgende Interpolationsschritte $(x_i; y_i)$ auf eine Richtungsänderung im Aufzeichnungsraster überprüft werden und jeder zuvor durch Interpolation festgestellte Bildpunkt zwischen zwei aufeinanderfolgenden Interpolationsschritten $(x_i; y_i)$ nur dann durch ein Steuerbit als Schaltpunkt für die Steuerung des Aufzeichnungsorgans markiert wird, wenn eine zuvor festgelegte Richtungsänderung der aufeinanderfolgenden Interpolationsschritte $(x_i; y_i)$ stattgefunden hat,

e) für eine in Speicherplätze und Speicherzeilen organisierte und zur Aufnahme der Steuerbits vorgesehene Schaltpunkt-Speichereinrichtung (62), in der die Länge einer Speicherzeile von der Größe des gegebenenfalls gedrehten Zeichens abhängig ist und welche durch Koordinatenwerte $(\bar{x};$

$\bar{y})$ eines der Schaltpunkt-Speichereinrichtung (62) zugeordneten Koordinatensystems $(\overline{XY})$ adressierbar ist, Schreib-Adressen $(\bar{x}_s; \bar{y}_s)$ aus den Bildpunkt-Koordinaten $(x^*; y^*)$ der als Schaltpunkte markierten Bildpunkte eines Zeichens oder Zeichenabschnitts und dessen Positionen auf dem Aufzeichnungsmedium berechnet werden,

f) mit den berechneten Schreib-Adressen $(\bar{x}_s; \bar{y}_s)$ die Steuerbits der Zeichen und Zeichenabschnitte nacheinander als Schaltpunkt-Bilder in die Schaltpunkt-Speichereinrichtung (62) eingeschrieben werden,

g) Lese-Adressen $(\bar{x}_L; \bar{y}_L)$ zum punkt- und zeilenweisen Auslesen der Steuerbits aus der Schaltpunkt-Speichereinrichtung (62) gebildet worden,

h) für eine in Speicherplätze und Speicherzeilen organisierte und zur Aufnahme der Steuerbits vorgesehene Video-Speichereinrichtung (17), in der die Länge einer Speicherzeile der Länge einer Bildlinie entspricht und welche durch Koordinatenwerte $(\bar{u}; \bar{v})$ eines der Video-Speichereinrichtung (17) zugeordneten Koordinatensystems $(\overline{UV})$ adressierbar ist, Schreib-Adressen $(\bar{u}_s; \bar{v}_s)$ aus den Leseadressen $(\bar{x}_L; \bar{y}_L)$ der Schaltpunkt-Speichereinrichtung (62) und den Positionen der Zeichen und Zeichenabschnitte auf dem Aufzeichnungsmedium (29) berechnet werden,

i) mit den berechneten Lese-Adressen $(\bar{x}_L; \bar{y}_L)$ für die Schaltpunkt-Speichereinrichtung (62) jeweils die in der Schaltpunkt-Speichereinrichtung (62) abgelegten Steuerbits des Schaltpunkt-Bildes eines Zeichens oder Zeichenabschnitts punkt- und zeilenweise ausgelesen und mit den berechneten Schreib-Adressen $(\bar{u}_s; \bar{v}_s)$ für die Video-Speichereinrichtung (17) nacheinander auf diejenigen Speicherplätze der Video-Speichereinrichtung (17) überschrieben werden, die der Position des jeweiligen Zeichens in der aufzuzeichnenden Textzeile entspricht,

k) beim Überschreiben der Steuerbits der Schaltpunkt-Bilder der Zeichen oder Zeichenabschnitte in die Video-Speichereinrichtung (17) zusätzlich auch in Zeilen-Richtung zwischen den beim Überschreiben adressierten Speicherplätzen liegende Speicherplätze mit Steuerbits belegt werden,

l) Lese-Adressen $(\bar{u}_L; \bar{v}_L)$ für die Video-Speichereinrichtung (17) aus den Positions-Koordinaten $(u; v)$ der momentan aufzuzeichnenden Bildpunkte auf der Aufzeichnungsseite (29) nach den Gleichungen:

$$\bar{u}_L = u$$
$$\bar{v}_L = v$$

gebildet werden und dann

m) die unter den Lese-Adressen $(\bar{u}_L; \bar{v}_L)$ abgelegten Steuerbits aus der Video-Speichereinrichtung (17) ausgelesen und in das Steuersignal für das Aufzeichnungsorgan umgewandelt werden, wobei das Steuersignal die jeweilige Einschaltdauer bzw. Ausdauer des Aufzeichnungsorgans bestimmt.

2. Verfahren zum bildpunkt- und bildlinienweisen Aufzeichnen von Zeichen, insbesondere von Schriftzeichen, auf einer Aufzeichnungsseite beim elektronischen Lichtsatz, bei dem die zum Aufzeichnen benötigten Zeichendaten und Positionsdaten aufgerufen und in ein Steuersignal für ein relativ zur Aufzeichnungsseite bewegliches Aufzeichnungsorgan umgesetzt werden, und bei dem

a) vor der Aufzeichnung jede geschlossene Kontur eines Zeichens, ausgehend von einem Startpunkt auf jeder Kontur, durch in einer Umlaufrichtung um die Kontur aufeinanderfolgende Konturabschnitte beschrieben und die Koordinaten $(x; y)$ der Konturabschnitt-Endpunkte und die Startpunkt-Koordinaten $(x_0; y_0)$ in einem Codierungsraster eines auf das Zeichen-Geviert bezogenen Koordinaten-Systems $(XY)$ bestimmt und als codierte Zeichendaten einer Zeichengröße gespeichert wird, bei der Aufzeichnung

b) die Aufzeichnungsseite (29) nacheinander in streifenförmigen Abschnitten aufgezeichnet wird, wobei ein Abschnitt nachfolgend als Belichtungs-Fenster (200) benannt ist, dessen Breite der Breite der Aufzeichnungsseite (29) in Bildlinienrichtung entspricht und dessen Höhe senkrecht zu den Bildlinien mindestens eine Bildlinie umfaßt, und das Belichtungs-Fenster (200) bei der Aufzeichnung senkrecht zu den Bildlinien nacheinander jeweils um seine Höhe auf der Aufzeichnungsseite (29) verschoben wird, wobei seine jeweilige Position auf der Aufzeichnungsseite (29) durch eine Positionskoordinate $(v_F)$ angegeben wird,

c) die Startpunkt Koordinaten $(x_0; y_0)$ für jede Kontur und die Koordinaten $(x; y)$ der Konturabschnitt-Endpunkte eines Zeichens oder Zeichenabschnitts um einen Größenfaktor verändert werden, der sich aus der aufzuzeichnenden Zeichengröße und dem Verhältnis zwischen dem Codierungsraster und einem gewünschten Aufzeichnungsraster ergibt,

d) für jeden aufeinanderfolgenden Konturabschnitt eines Zeichens oder Zeichenabschnitts aus dem um den Größenfaktor geänderten Startpunkt-Koordinaten $(x'_0; y'_0)$ und aus der Summe der zwischen den Konturabschnitt-Endpunkten im Aufzeichnungsraster ausgeführten Interpolationsschritte $(x_i; y_i)$ die Bildpunkt-Koordinaten $(x^*; y^*)$ derjenigen Bildpunkte im Aufzeichnungsraster nach den Gleichungen:

$$x^* = x'_0 + \Sigma x_i$$
$$y^* = y'_0 + \Sigma y_i$$

festgestellt werden, welche den betreffenden Konturabschnitt möglichst gut annähern,

e) aufeinanderfolgende Interpolationsschritte $(x_i; y_i)$ auf eine Richtungsänderung im Aufzeichnungsraster überprüft werden und jeder zuvor durch Interpolation festgestellte Bildpunkt zwischen zwei aufeinanderfolgenden Interpolationsschritten $(x_i; y_i)$ nur dann durch ein Steuerbit als Schaltpunkt für die Steuerung des Aufzeichnungsorgans markiert wird, wenn eine zuvor festgelegte Richtungsänderung der aufeinanderfolgenden Interpolationsschritte $(x_i; y_i)$ stattgefunden hat,

f) für eine in Speicherplätze und Speicherzeilen organisierte und zur Aufnahme der Steuerbits vorgesehene Schaltpunkt-Speichereinrichtung (62), welche eine der Anzahl von in das Belichtungs-Fenster (200) fallenden Bildlinien entsprechende Anzahl von Speicherzeilen aufweist, deren maximale Länge von der Größe des gegebenenfalls gedrehten Zeichens abhängig ist und welche durch Koordinatenwerte $(\overline{x}; \overline{y})$ eines der Schaltpunkt-Speichereinrichtung (62) und dem Belichtungs-Fenster (200) zugeordneten Koordinatensystems $(\overline{XY})$ adressierbar ist, Schreib-Adressen $(\overline{x}_S; \overline{y}_S)$ nach den Gleichungen

$$\overline{x}_S = x'_0 + \Sigma x;$$
$$\overline{y}_S = v_g - v_F - y'_0 - \Sigma y;$$

berechnet werden, wobei «$v_F$» die momentane Positionskoordinate des Belichtungs-Fensters (200) und «$v_g$» eine die momentane Position der Schriftgrundlinie des Zeichens oder Zeichenabschnitts auf der Aufzeichnungsseite (29) kennzeichnende Positionskoordinate sind, und wobei «$x'_0$» und «$v_g - v_F - y'_0$» die jeweiligen Start-Adressen darstellen,

g) mit den berechneten Schreib-Adressen $(\overline{x}_S; \overline{y}_S)$ die Steuerbits derjenigen Zeichen und Zeichenabschnitte nacheinander als Schaltpunkt-Bilder in die Schaltpunkt-Speichereinrichtung (62) eingeschrieben werden, die in jeder Fenster-Position ganz oder teilweise in das Belichtungs-Fenster (200) fallen,

h) Lese-Adressen $(\overline{x}_L; \overline{y}_L)$ zum punkt- und zeilenweisen Auslesen der Steuerbits aus der Schaltpunkt-Speichereinrichtung (62) gebildet werden,

i) für eine in Speicherplätze und Speicherzeilen organisierte und zur Aufnahme der Steuerbits der auf die Breite des Belichtungs-Fensters (200) entfallenen Zeichen oder Zeichenabschnitte vorgesehene Video-Speichereinrichtung (17), welche eine der Anzahl von in das Belichtungs-Fenster (200) fallenden Bildlinien entsprechende Anzahl von Speicherzeilen aufweist, deren Längen den Bildlinienlängen entsprechen, und welche durch Koordinatenwerte $(\overline{u}; \overline{v})$ eines auf die Video-Speichereinrichtung (17) bezogenen Koordinatensystems $(\overline{UV})$ adressierbar ist, Schreib-Adressen $(\overline{u}_S; \overline{v}_S)$ nach den Gleichungen:

$$\overline{u}_S = \overline{u}_0 + \Sigma GB + VB + \overline{x}_L$$
$$\overline{v}_S = \overline{y}_L$$

berechnet werden, wobei «$\overline{u}_0$» den Beginn einer Textzeile auf der Aufzeichnungsseite (29), «GB» die Gesamtbreite des Zeichen-Gevierts, «$\Sigma GB$» die Summe der Gesamtbreiten der vorangegangenen Zeichen oder Zeichenabschnitte in einer Bildlinie und «VB» die Vorbreite des aktuellen Zeichens auf der Aufzeichnungsseite (29) kennzeichnen,

k) mit den berechneten Lese-Adressen $(\overline{x}_L; \overline{y}_L)$ für die Schaltpunkt-Speichereinrichtung (62) jeweils die in der Schaltpunkt-Speichereinrichtung (62) abgelegten Steuerbits des Schaltpunkt-Bildes eines Zeichens oder Zeichenabschnitts punkt- und zeilenweise ausgelesen und mit den berechneten Schreib-Adressen $(\overline{u}_S; \overline{v}_S)$ für die Video-Speicher-

einrichtung (17) nacheinander auf diejenigen Speicherplätze der Video-Speichereinrichtung (17) überschrieben werden, die der Position des jeweiligen Zeichens oder Zeichenabschnitts in der aufzuzeichnenden Textzeile entspricht,

l) beim Überschreiben der Steuerbits der Schaltpunkt-Bilder der Zeichen oder Zeichenabschnitte in die Video-Speichereinrichtung (17) zusätzlich auch in Zeilenrichtung zwischen den beim Überschreiben adressierten Speicherplätzen liegende Speicherplätze mit Steuerbits belegt werden.

m) Lese-Adressen ($\overline{u}_L$; $\overline{v}_L$) für die Video-Speichereinrichtung (17) nach den Gleichungen:

$$\overline{u}_L = u$$
$$\overline{v}_L = v - v_F$$

gebildet werden, wobei «u; v» die Koordinaten der momentan aufzuzeichnenden Bildpunkte auf der Aufzeichnungsseite und «$v_F$» die Positionskoordinaten des Belichtungs-Fensters (200) sind, und dann

n) die unter den Lese-Adressen ($\overline{u}_L$; $\overline{v}_L$) abgelegten Steuerbits aus der Video-Speichereinrichtung (17) ausgelesen und in das Steuersignal für das Aufzeichnungsorgan umgewandelt werden, wobei das Steuersignal die jeweilige Einschaltdauer bzw. Ausschaltdauer des Aufzeichnungsorgans bestimmt.

3. Verfahren nach Anspruch 2, dadurch gekennzeichnet, daß die ganz oder teilweise in das Belichtungs-Fenster (200) fallenden Zeichen oder Zeichenabschnitte durch einen Vergleich der Positionskoordinaten der Textdaten mit den aktuellen Positionskoordinaten des Belichtungs-Fensters (200) im auf die Videospeichereinrichtung (17) bezogenen Koordinatensystem ($\overline{U}\overline{V}$) ermittelt werden.

4. Verfahren nach einem der Ansprüche 1 bis 3, dadurch gekennzeichnet, daß ein Bildpunkt dann als Schaltpunkt auf einer Kontur durch ein Steuerbit markiert wird, wenn mindestens einer der aufeinanderfolgenden Interpolationsschritte ($x_i$; $y_i$) senkrecht zur Bildlinieneinrichtung und beide aufeinanderfolgenden Interpolationsschritte ($x_i$; $y_i$) in Umlaufrichtung der Kontur erfolgen.

5. Verfahren nach einem der Ansprüche 1 bis 4, dadurch gekennzeichnet, daß beim Überschreiben der Steuerbits in die Video-Speichereinrichtung (17) zur Bildung der Bit-Strukturen der Zeichen oder Zeichenabschnitte zusätzlich diejenigen Speicherplätze der Video-Speichereinrichtung (17) mit Steuerbits belegt werden, die jeweils in Bildlinienrichtung zwischen denjenigen Speicherplätzen, die als Schaltpunkte auf den Vorderkanten der von den Bildlinien geschnittenen Schwarzbildabschnitte der Zeichen oder Zeichenabschnitten markiert sind, und denjenigen Speicherplätzen liegen, die als Schaltpunkte auf den Hinterkanten der betreffenden Schwarzbildabschnitte markiert sind.

6. Verfahren nach einem der Ansprüche 1 bis 5, dadurch gekennzeichnet, daß

a) die Koordinaten-Differenzen ($\Delta x$; $\Delta y$) zwischen dem Startpunkt und dem Endpunkt eines Konturabschnitts festgestellt werden,

b) die bei der Interpolation ausgeführten Interpolationsschritte ($x_i$; $y_i$) vorzeichenrichtig aufaddiert werden, und

c) ein Signal «Abschnittsende» für einen Konturabschnitt erzeugt wird, wenn die Summe der ausgeführten Interpolationsschritte ($x_i$; $y_i$) gleich den Koordinaten-Differenzwerten ($\Delta x$; $\Delta y$) ist.

7. Verfahren nach einem der Ansprüche 1 bis 6, dadurch gekennzeichnet, daß

a) die Schaltpunkt-Speichereinrichtung (62) mit Hilfe von zwei Teilspeichern (88; 88') im Wechselbetrieb arbeitet,

b) die Steuerbits des Schaltpunkt-Bildes eines Zeichens oder Zeichenabschnitts aus einem Teilspeicher in die Video-Speichereinrichtung (17) überschrieben werden, und

c) gleichzeitig die Steuerbits des Schaltpunkt-Bildes des nachfolgenden Zeichens oder Zeichenabschnitts in den anderen Teilspeicher eingeschrieben werden.

8. Verfahren nach einem der Ansprüche 1 bis 7, dadurch gekennzeichnet, daß

a) die Video-Speichereinrichtung (17) mit Hilfe von zwei Teilspeichern (111; 111') im Wechselbetrieb arbeitet,

b) die Steuerbits der aufzuzeichnenden Zeichen der Zeichenabschnitte aus einem Teilspeicher zur Aufzeichnung ausgelesen werden, und

c) gleichzeitig die Steuerbits der Schaltpunkt-Bilder der nachfolgend aufzuzeichnenden Zeichen oder Zeichenabschnitte aus der Schaltpunkt-Speichereinrichtung (62) in den anderen Teilspeicher überschrieben werden.

9. Verfahren nach einem der Ansprüche 1 bis 8, bei dem die Zeichen jeweils von einer Zeichenfläche im Zeichen-Geviert umschrieben werden, dadurch gekennzeichnet, daß der Adressen-Bereich der Lese-Adressen ($\overline{x}_L$; $\overline{y}_L$) der Schaltpunkt-Speichereinrichtung (62) zum Auslesen der Steuerbits des Schaltpunkt-Bildes eines Zeichens auf die jeweilige Zeichenfläche des Zeichens begrenzt wird.

10. Verfahren nach einem der Ansprüche 1 bis 9, dadurch gekennzeichnet, daß die Konturabschnitte Geradenabschnitte, Kreisabschnitte im Uhrzeigersinn und Kreisabschnitte entgegen dem Uhrzeigersinn sind.

11. Verfahren nach einem der Ansprüche 1 bis 10, dadurch gekennzeichnet, daß die Umlaufrichtung an einer äußeren Kontur eines Zeichens im Uhrzeigersinn und an einer inneren Kontur entgegen dem Uhrzeigersinn festgelegt ist.

12. Verfahren nach einem der Ansprüche 1 bis 11, dadurch gekennzeichnet, daß die codierten Zeichendaten Kenndaten als Flächenparameter für die Zeichen und die Zeichen-Gevierte, Konturbefehle und die Startpunkt-Koordinaten ($x_0$; $y_0$) für jede Kontur enthalten.

13. Verfahren nach Anspruch 12, dadurch gekennzeichnet, daß jeweils aufeinanderfolgende Konturabschnitte desselben Typs (Geradenabschnitte; Kreisabschnitte) zu einem Konturbefehl zusammengefaßt werden, der eine Aussage über den Typ der Konturabschnitte und über die Anzahl der Konturabschnitte desselben Typs liefert, sowie die Koordinatenwerte für jeden Konturabschnitt enthält.

14. Verfahren nach Anspruch 13, dadurch gekennzeichnet, daß für einen Geradenabschnitt jeweils die Koordinatenwerte des Endpunktes des Geradenabschnitts und für einen Kreisabschnitt jeweils die Koordinatenwerte des Endpunktes und die Koordinatenwerte des Anfangspunktes relativ zum Kreismittelpunkt des betreffenden Kreisabschnitts angegeben werden.

15. Verfahren nach einem der Ansprüche 2 bis 14, dadurch gekennzeichnet, daß jeder Abschnitt eines Zeichens, der in das Belichtungs-Fenster (200) fällt, auch in der aktuellen Position des Belichtungs-Fensters (200) aufgezeichnet wird.

16. Verfahren nach einem der Ansprüche 1 bis 15, dadurch gekennzeichnet, daß die Teilspeicher (88; 88') der Schaltpunkt-Speichereinrichtung (62) und die Teilspeicher (111; 111') der Video-Speichereinrichtung (17) jeweils beim Lesen der gespeicherten Daten gleichzeitig gelöscht werden.

17. Einrichtung zum bildpunkt- und bildlinienweisen Aufzeichnen von Zeichen, insbesondere von Schriftzeichen, auf einer Aufzeichnungsseite beim elektronischen Lichtsatz, bestehend aus:

a) einer Speichereinrichtung (3; 5) für Textdaten,

b) einem Zeichen-Speicher (8) zur Ablage von codierten Zeichendaten, welcher mit der Speichereinrichtung (3; 5) verbunden ist, zum Aufrufen von codierten Zeichendaten durch Textdaten,

c) einem Videosignal-Generator (12) zur Umwandlung der aufgerufenen, codierten Zeichendaten in Steuerbits, mit einer an den Zeichen-Speicher (8) angeschlossenen Decodiereinrichtung und mit einer Zwischenspeichereinrichtung für Steuerbits,

d) einer Video-Speichereinrichtung (17), welche mit der Zwischenspeichereinrichtung in Verbindung steht, zur Speicherung der Steuerbits der Zeichen auf denjenigen Speicherplätzen, die den Positionen der Zeichen auf der Aufzeichnungsseite (29) entsprechen,

e) einem durch die Steuerbits als Steuersignal beaufschlagten Aufzeichnungsorgan (2), welches an die Video-Speichereinrichtung (17) angeschlossen ist,

f) einem Adreß-Steuerwerk (39), welches an die Video-Speichereinrichtung (17) angeschlossen ist, zum Erzeugen von Lese-Adressen ($\overline{u}_L$; $\overline{v}_L$) für die Video-Speichereinrichtung (17) in Abhängigkeit von den relativen Positionen des Aufzeichnungsorgans (2) zur Aufzeichnungsseite (29), und

g) einem verschiebbaren Aufzeichnungsträger (28) für die Aufzeichnungsseite (29), dadurch gekennzeichnet,

h) daß der Zeichen-Speicher (8) umrißcodierte Zeichendaten enthält, welche jede geschlossene Kontur eines Zeichens, ausgehend von einem Startpunkt auf jeder Kontur, durch in einer Umlaufrichtung um die Kontur aufeinanderfolgende Konturabschnitte beschreiben und welche die Koordinaten (x; y) der Konturabschnitt-Endpunkte und der Startpunkt-Koordinaten ($x_0$; $y_0$) in einem Codierungsraster angeben,

i) daß die Decodiereinrichtung (57; 58; 59) des Videosignal-Generators (12) zum Decodieren der umrißcodierten Zeichendaten in die Koordinaten (x, y) der Konturabschnitt-Endpunkte, in die Startpunkt-Koordinaten ($x_0$; $y_0$) und in entsprechende Längenwerte sowie zur Änderung der Koordinaten und Längenwerte um einen vorgegebenen Größenfaktor ausgebildet ist,

j) daß die Zwischenspeichereinrichtung des Videosignal-Generators (12) als Schaltpunkt-Speichereinrichtung (62) für Schaltpunkte eines Zeichens oder Zeichenabschnitts ausgebildet ist,

k) daß der Videosignal-Generator (12) folgende zusätzliche Komponenten aufweist:

k1) eine an die Decodiereinrichtung (57; 58; 59) angeschlossene Interpolations-Stufe (60) zur Bestimmung der Bildpunkt-Koordinaten ($x^*$; $y^*$) derjenigen Bildpunkte in einem Aufzeichnungsraster, welche die Konturabschnitte der Zeichen oder Zeichenabschnitte durch entsprechende Interpolationsschritte ($x_i$; $y_i$) möglichst gut annähern,

k2) eine Auswerte-Stufe (61), welche mit der Interpolations-Stufe (60) in Verbindung steht, zur Überprüfung aufeinanderfolgender Interpolationsschritte ($x_i$; $y_i$) auf eine Richtungsänderung im Aufzeichnungsraster hin und zum Markieren von Bildpunkten zwischen zwei aufeinanderfolgenden Interpolationsschritten ($x_i$; $y_i$) als Schaltpunkte für die Steuerung des Aufzeichnungsorgans, wenn eine zuvor festgelegte Richtungsänderung der aufeinanderfolgenden Interpolationsschritte ($x_i$, $y_i$) stattgefunden hat, und

k3) Adreß-Zähler (101; 102), welche an die Codiereinrichtung (57; 58; 59), an die Interpolations-Stufe (60) und die Schaltpunkt-Speichereinrichtung (62) angeschlossen sind, zur Erzeugung von Schreib-Adressen ($\overline{x}_S$; $\overline{y}_S$) für die Schaltpunkt-Speichereinrichtung (62),

l) und daß ein Adreß-Steuerwerk (120) vorgesehen ist, welches mit der Decodiereinrichtung (57; 58; 59), mit der Schaltpunkt-Speichereinrichtung (62) und mit der Video-Speichereinrichtung (17) verbunden ist, zur Erzeugung von Lese-Adressen ($\overline{x}_L$; $\overline{y}_L$) für die Schaltpunkt-Speichereinrichtung (62) und von Schreib-Adressen ($\overline{u}_S$; $\overline{v}_S$) für die Video-Speichereinrichtung (17) beim Überschreiben der Steuerbits.

18. Einrichtung nach Anspruch 17, dadurch gekennzeichnet, daß die Einrichtung (57; 58; 59)

a) einen Decodierer (57) zum Decodieren der Zeichendaten,

b) eine mit dem Decodierer (57) verbundene Transformations-Stufe (58) zur Änderung der Koordinaten um den Größenfaktor, und

c) eine mit der Transformations-Stufe (58) verbundene Rechen-Stufe (59) aufweist.

19. Einrichtung nach Anspruch 17 oder 18, dadurch gekennzeichnet, daß das Aufzeichnungsorgan (2)

a) einen Laserstrahl-Generator (19),

b) einen durch das Steuersignal gesteuerten Modulator (21) zum Ein- und Ausschalten des Laserstrahls, und

c) eine Ablenkeinrichtung (25; 27) für den Laserstrahl über die Aufzeichnungsseite (29) enthält.

20. Einrichtung nach Anspruch 19, dadurch gekennzeichnet, daß die Ablenkeinrichtung (25; 27) ein Polygon-Spiegel ist.

21. Einrichtung nach einem der Ansprüche 17 bis 20, dadurch gekennzeichnet, daß die Schaltpunkt-Speichereinrichtung (62) aus zwei im Wechselbetrieb arbeitenden Teilspeichern (88; 88') besteht.

22. Einrichtung nach einem der Ansprüche 17 bis 21, dadurch gekennzeichnet, daß die Video-Speichereinrichtung (17) aus zwei im Wechselbetrieb arbeitenden Teilspeichern (111; 111') besteht.

## Claims

1. A method for point-by-point and line-by-line recording of symbols, more especially of characters, on a recording surface in electonic photocomposition, in which the character data and the position data are called up from text data constituting typesetting commands and are converted into a control signal for a recording device is movable relative to the recording surface and in which

a) prior to recording, each closed contour of a character is defined from a starting point of each contour by contour segments succeeding each other circumferentially around the contour and the coordinates (x, y) of contour-segment endpoints and the starting-point coordinates $(x_0; y_0)$ are determined in a coding raster of a coordinate system (XY) with reference to a character-grid and is then stored as coded type data of a type size, and during recording

b) the starting-point coordinates $(x_0; y_0)$ for each contour and the coordinates (x; y) of the contour-segment endpoints of a character is varied by a size factor computed from the type size to be recorded and the ratio between the coding raster and the desired recording raster,

c) for each successive contour segment of a character or of a character segment there are determined, from the starting-point coordinates $(x'_0; y'_0)$ varied by the size factor and from the sum of the interpolation steps $(x_i; y_i)$ carried out in the recording raster, the image-point coordinates $(x^*; y^*)$ according to the equations:

$$x^* = x'_0 + \Sigma\, x_i$$
$$y^* = y'_0 + \Sigma\, y_i$$

of those image points in the recording raster which best approximate the contour segments concerned,

d) successive interpolation steps $(x_i; y_i)$ are checked for change of direction in the recording raster and each image point previously determined by interpolation between two successive interpolation steps $(x_i; y_i)$ is only then marked by a control bit as switch point for the control of the recording device if a previously determined change of direction of the successive interpolation steps $(x_i; y_i)$ has in fact taken place,

e) for a switch-point storage (62) device organized in storage locations and storage rows and provided to receive the control bits, in which the length of a storage row depends on the size of the optionally rotated character and which is addressable by means of the coordinate values $(\bar{x}; \bar{y})$ of a coordinate system $(\overline{XY})$ associated with the switch-point storage device (62), write-adresses $(\bar{x}_s; \bar{y}_s)$ are computed from the image-point coordinates $(x^*; y^*)$ of the image points marked as switch points of a character or of a character segment and of its positions on the recording medium,

f) by means of the computed write-addresses $(\bar{x}_s; \bar{y}_s)$ the control bits of the characters and character segments are written in succession as switch-point images into the switch-point register (62),

g) readout-addresses $(\bar{x}_L; \bar{y}_L)$ are formed for point-by-point and line-by-line readout of the control bits from the switch-point register (62),

h) for a video-storage device (17), organized in storage locations and storage rows and provided for receiving the control bits, in which the length of a storage row corresponds to the length of an image line and which is addressable by means of the coordinate values $(\bar{u}; \bar{v})$ of a coordinate system $(\overline{UV})$ associated with the video-storage device (17), write-addresses $(\bar{u}_s; \bar{v}_s)$ are computed from the readout-addresses $(\bar{x}_L; \bar{y}_L)$ of the switch-point register (62) and the positions of the characters and the character segments on the recording medium (29),

i) by means of the computed readout-addresses $(\bar{x}_L; \bar{y}_L)$ for the switch-point register (62), each of the control bits of the switch-point image stored in the switch-point register (62) of a character or a character segment are read out point by point and line by line and, together with the computer write-addresses $(\bar{u}_s; \bar{v}_s)$ for the video-storage device (17) are transcribed in succession to those storage loci of the video-storage device (17) which correspond to the position of the character concerned in each case within the text-line to be recorded,

k) when transcribing the control bits of the switch-point images of the characters or character segments into the video-storage device (17), the storage location situated between the storage locations addressed during the line-directed transcription are also filled with control bits,

l) readout-addresses $(\bar{u}_L; \bar{v}_L)$ for the video-storage device (17) are formed from the position-coordinates (u; v) on the recording surface (29) of the image-points to be instantaneously recorded according to the equations:

$$\bar{u}_L = u$$
$$\bar{v}_L = v$$

and thereafter

m) the control bits stored in the readout-addresses $(\bar{u}_L; \bar{v}_L)$ are read out from the video-storage device and are converted into a control signal for the recording device, said control signal determining the length of the active and inactive period each of the recording device.

2. A method for point-by-point and line-by-line recording of symbols, more especially of characters, on a recording surface in electronic photo-composition, in which the character data and position data required for recording are called up and are converted into a control signal for a recording device which is movable relative to the recording surface and in which:

a) prior to recording, each closed contour of a character is defined from a starting point of each contour by contour segments succeeding each other circumferentially around the contour and the coordinates (x; y) of the contour-segment endpoints and the starting-point coordinates $(x_0; y_0)$ are determined in a coding raster of a coordinate system (XY) with reference to a character-grid and stored as coded type data of a type size, and in which during recording

b) the recording surface (29) is filled with a succession of strip-shaped segments, in which a segment will be hereinafter referred to as exposure-window (200) the width of which corresponds to the width of the recording surface and whose height perpendicular to the image lines covers at least one image line, and the exposure window (200) is displaced during recording perpendicularly to the image lines in succession by an amount corresponding to its height on the recording surface (29) step by step, its instantaneous position on the recording surface (29) being indicated by a position-coordinate $(v_F)$,

c) the starting-point coordinates $(x_0; y_0)$ for each contour and the coordinates (x; y) of the contour-segment endpoints of a character are varied by a size factor computed from the type size to be recorded and the ratio between the coding raster and a desired recording raster,

d) for each successive contour segment of a character or of a character segment there are determined, from the starting-point coordinates $(x'_0; y'_0)$ varied by the size factor and from the sum of interpolation steps $(x_i; y_i)$ carried out in the recording raster, the image-point coordinates $(x^*; y^*)$ according to the equations:

$$x^* = x'_0 + \Sigma\, x_i$$
$$y^* = y'_0 + \Sigma\, y_i$$

of those image points in the recording raster which best approximate the contour segment concerned,

e) successive interpolation steps $(x_i; y_i)$ are checked for change of direction in the recording raster and each image point previously determined by interpolation between two successive interpolation steps $(x_i; y_i)$ is only then marked by the control bit as switch point for the control of the recording device if a previously determined change of direction of the successive interpolation steps $(x_i; y_i)$ has in fact taken place,

f) for a switch-point register (62) organized in storage locations and storage rows and provided to receive the control bits, which has a number of storage rows corresponding to the number of image lines falling within the exposure-window (200), the maximum length of said storage rows being dependent on the size of the optionally rotated character, and which is addressable by means of coordinate values $(\overline{x}; \overline{y})$ of a coordinate system $(\overline{XY})$ associated with the switch-point register (62) and the exposure window (200), write-addresses $(\overline{x}_s; \overline{y}_s)$ are computed according to the equations:

$$\overline{x}_s = x'_0 + \Sigma\, x_i$$
$$\overline{y}_s = v_g - v_F - y'_0 - \Sigma\, y_i$$

where «$v_F$» is the instantaneous position-coordinate of the exposure-window (200) and «$v_g$» represents the position coordinate of the instantaneous script base line of the character or character segment on the recording surface (29) and «$x'_0$» and «$v_g - v_F - y'_0$» each represent the starting addresses,

g) by means of the computed write-addresses $(\overline{x}_s; \overline{y}_s)$, the control bits of those characters and character segments are written in succession as switch-point register (62) which fall wholly or partly within the exposure-window (200) in any position of the latter,

h) readout-addresses $(\overline{x}_L; \overline{y}_L)$ are formed for point-by-point and line-by-line readout of the control bits from the switch-point register (62),

i) for a video-storage device (17) organized in storage locations and storage rows and provided for receiving the control bits of the characters or character segments comprised over the width of the exposure window (200), which video-storage device has a number of storage lines corresponding to the number of image lines falling within the exposure window (200), the length of said storage lines corresponding to the length of the image lines, and which is addressable through the coordinate values $(\overline{u}; \overline{v})$ of a coordinate system $(\overline{UV})$ referred to the video-storage device (17), write-addresses $(\overline{u}_s; \overline{v}_s)$ are computed according to the equations:

$$\overline{u}_s = \overline{u}_0 + \Sigma\, GB + VB + \overline{x}_L$$
$$\overline{v}_s = \overline{y}_L$$

where «$\overline{u}_0$» represents the start of a text line on the recording surface (29) «GB» represents the total width of the character-grid «GB» is the sum of the total widths of the preceding characters or character segments in an image line and «VB» stands for the leading width of the actual character on the recording surface (29),

k) reading out with the aid of the computed readout-addresses $(\overline{x}_L; \overline{y}_L)$ for the switch-point register (62) each of the control bits stored in the switch-point register (62) of the switch-point image of a character or character segment point by point or line by line and transcribing same by means of the computed write-addresses $(\overline{u}_s; \overline{v}_s)$ for the video-storage device (17) in succession into those storage locations of the video-storage device (17) which correspond to the position of the respective character or character segment in the text-line to be recorded,

l) when transcribing the control bits of the switch-point images of the characters or character segments into the video-storage device (17), the storage locations situated between the storage locations addressed during the linearly directed transcription are also filled with control bits,

m) readout-addresses $(\overline{u}_L; \overline{v}_L)$ for the video-storage device (17) are formed according to the equations:

$$\overline{u}_L = u$$
$$\overline{v}_L = v - v_F$$

in which «u; v» designates the coordinates on the recording surface of the image points to be recorded instantaneously and «$v_F$» stands for the position-coordinates of the exposure window (200), shereafter

n) the control bits stored at the readout-addresses $(\overline{u}_L; \overline{v}_L)$ are read out from the video-storage device (17) and are converted into the control signal for the recording device, said control signal determining the length of the active and inactive period each of the recording device.

3. A method according to Claim 2, characterized in that the characters or character segments falling wholly or partly within the exposure window (200) are determined by a comparison of the position-coordinates of the text data with the actual coordinates of the exposure window (200) in the coordinate-system (UV) referred to the video-storage device (17).

4. A method according to any one of Claims 1 to 3, characterized in that an image point is only then marked as switch-point on a contour by a control bit when at least one of the consecutive interpolation steps $(x_i; y_i)$ takes place perpendicularly to the image line direction and both successive interpolation steps $(x_i; y_i)$ take place in circumferential direction of the contour.

5. A method according to any one of Claims 1 to 4, characterized in that during transcription of the control bits into the video-storage device (17) to form the bit-structure of the characters or character segments, additionally those storage locations of the video-storage device (17) are filled with control bits which are each situated in image-line direction between those storage locations which are marked as switch points on the leading edges of the blank image portions of the characters or character segments intersected by image lines, and those storage locations which are marked as switch points ou the trailing edges of the blank image portions concerned.

6. A method according to any one of Claims 1 to 5, characterized in that

a) the coordinate-differences $(\Delta x; \Delta y)$ between the starting point and the end-point of a contour segment are determined,

b) the interpolation steps $(x_i; y_i)$ carried out during interpolation are added up with the correct sign, and

c) an «end of segment» signal is generated for a contour segment when the sum of executed interpolation steps $(x_i; y_i)$ equals the coordinate-difference values $(\Delta x; \Delta y)$.

7. A method according to any one of Claims 1 to 6, characterized in that

a) the switch-point register (62) works in alternate operational mode with the aid of two component registers (88; 88'),

b) the control bits of the switch-point image of a character or character segment are transcribed from a component register into the video-storage device (17), and

c) at the same time, the control bits of the switch-point image of the next following character or character segment are written into the other component register.

8. A method according to any one of Claims 1 to 7, characterized in that

a) the video-storage device (17) works in alternate operational mode with the aid of two component registers (111; 111'),

b) the control bits of the characters or character segments to be recorded are read from a component register for recording, and

c) at the same time the control bits of the switch-point images of the characters or character segments to be subsequently recorded are transcribed from the switch-point register (62) into the other component register.

9. A method according to any of Claims 1 to 8, in which the characters are each transcribed from a character-area in the character-grid characterized in that the address-zone of the readout-addresses $(\overline{x}_L; \overline{y}_L)$ of the switch-point register (62) for readout of the control bits of the switch-point image of a character is limited to the particular character-area of the character.

10. A method according to any one of Claims 1 to 9, characterized in that the contour segments are straight-line segments, clockwise-oriented circular segments and anticlockwise-oriented circular segments.

11. A method according to any one of Claims 1 to 10, characterized in that the circumferential direction on an outer contour of a character is set clockwise whilst on an inner contour it is set anitclockwise.

12. A method according to any one of Claims 1 to 11, characterized in that the coded character data contain characterizing data as area parameter for the characters and the character-grids as well as contour-commands and the starting-point coordinates $(x_0; y_0)$ for each contour.

13. A method according to Claim 12, characterized in that each of the successive contour segments of the same type (straight-line segments; circular segments) are grouped together into a contour command, which provides an indication of the number of contour segments of a given type, and also contains the coordinate values for each contour segment.

14. A method according to Claim 13, characterized in that for a straight-line segment the coordinate-values of the endpoint of the straight-line segment are indicated, whilst for a circular segment in each case the coordinate values of the endpoint and the coordinate values of the starting point are indicated relative to the center of the circle of the circular segment concerned.

15. A method according to any one of Claims 2 to 14, characterized in that each segment of a character which falls into the exposure-window (200), is also recorded in the actual position of the exposure window.

16. A method according to any one of Claims 1 to 15, characterized in that the component registers (88; 88') of the switch-point register (62) and the component registers (111; 111') of the video-storage device (17) are each simultaneously erased on reading of the stored data.

17. A device for the point-by-point and line-by-line recording of symbols, especially of characters, on a recording surface in electronic photo-composition, consisting of

a) a storage device (3; 5) for text data,

b) a character register (8) for storing coded character data, which is connected with the storage device (3; 5), for calling up coded character data by means of text data,

c) a videosignal-generator (12) for converting the called-up coded character data into control bits, with a decoding device connected to the character-store (8) and with an intermediate storage means for the control bits,

d) a video-storage device (17), which is linked with the intermediate store, for storing the control bits of the characters at those storage locations which correspond to the positions of the characters on the recording surface (29),

e) a recording device (2) acted on by the control bits as control signal, said device being connected to the video-storage device (17),

f) an address-controller (39), which is connected to the video-storage device (17), for generating readout-addresse ($\bar{u}_L$; $\bar{v}_L$) for the video-storage device (17) in dependence of the relative positions of the recording device (2) with respect to the recording surface (29) and

g) a displaceable record carrier (28) for the recording surface (29), characterized in that

h) the character-store (8) contains outline-coded character-data, which describe each closed contour of a character, starting from a starting point on each contour, by a succession of contour segments following each other in a circumferential direction around the contour and which indicate the coordinates (x; y) of the contour-segment endpoints and the starting-point coordinates ($x_0$; $y_0$) in a coding raster,

i) the decoding device (57; 58; 59) of the videosignal-generator (12) is constructed for decoding the outline-coded character data in coordinates (x, y) of the contour-segment end-points, in starting-point coordinates ($x_0$; $y_0$) and in corresponding values of length and for varying the coordinates and length values by a predetermined size factor,

j) that the intermediate storage device of the videosignal-generator (12) is constructed as a switch-point register (62) for the switch-points of a character or character segment,

k) that the videosignal-generator (12) has the following additional components:

k1) an interpolation-stage (60) connected to the decoding device (57; 58; 59), for determining the image-point coordinates (x*; y*) of those image points in a recording raster, which best approximate the contour segments of characters or character segments by corresponding interpolation steps ($x_i$; $y_i$),

k2) an analyzer-stage (61), which is connected to the interpolation-stage (60), for checking consecutive interpolation steps ($x_i$; $y_i$) for a change in direction within the recording raster and for marking image points between two successive interpolation steps ($x_i$; $y_i$) as switch-points for the control of the recording device, if a previously determined directional change of the successive interpolation steps ($x_i$; $y_i$) has taken place, and

k3) address-counters (101; 102) which are connected to the coding device (57; 58; 59), to the interpolation-stage (60) and to the switch-point register (62), for generating write-addresses ($\bar{x}_s$; $\bar{y}_s$) for the switch-point register (62),

l) and that an address-controller (120) is provided, which is connected with the decoding device (57; 58; 59), with the switch-point register (62) and with the video-storage device (17), for generating readout-addresses ($\bar{x}_L$; $\bar{y}_L$) for the switch-point register (62) and write-addresses $\bar{u}_s$; $\bar{v}_s$) for the video-storage device (17) when transcribing the control bits.

18. A device according to Claim 17, characterized in that the device (57; 58; 59) comprises:

a) a decoder (57) for decoding the character data,

b) a converter stage (58) connected to the decoder (57) for varying the coordinates by the size factor, and

c) a computer stage (59) connected to the converter stage (58).

19. A device according to Claim 17 or 18, characterized in that the recording device (2) contains:

a) a laser-beam generator (19),

b) a modulator (21) operated by the control signal for switching the laser beam on and off, and

c) a device (25; 27) for deflecting the laser beam over the recording surface (29).

20. A device according to Claim 19, characterized in that the deflector device (25; 27) is a polygonal mirror.

21. A device according to any one of Claims 17 to 20, characterized in that the switch-point register (62) consists of two component registers (88; 88') working in alternate operating mode.

22. A device according to any one of Claims 17 to 21, characterized in that the video-storage device (17) consists of two component registers (111; 111') working in alternate operating mode.

**Revendications**

1. Procédé pour l'enregistrement par points et par lignes de signes, notamment de caractères, sur une page d'enregistrement par photo-composition électronique, procédé dans lequel les données de textes constituant les données de signes et les données de positions d'instructions de composition nécessaires pour l'enregistrement, sont appelées et sont converties en un signal de commande pour un organe d'enregistrement susceptible de se déplacer par rapport à la page d'enregistrement, procédé dans lequel:

a) avant l'enregistrement, chaque contour fermé d'un signe, est décrit en partant d'un point de départ sur chaque contour, dans des parties de contours se succédant autour du contour dans un sens périphérique, et les coordonnées (x; y) des points terminaux des parties de contour et les coordonnées du point de départ $(x_0; y_0)$ sont déterminées dans une trame de codage d'un système de coordonnées (XY) rapportée au cadre des signes et sont mémorisées en tant que données de signes codées d'une grandeur de signe,

b) lors de l'enregistrement les coordonnées de point de départ $(x_0; y_0)$ pour chaque contour et des coordonnées (x; y) des points terminaux des parties de contour d'un signe ou d'une partie de signe, sont modifiées d'un facteur de grandeur qui résulte de la grandeur des signes à enregistrer et du rapport entre la trame de codage et une trame d'enregistrement souhaitée,

c) pour chaque partie de contour successive d'un signe ou d'une partie de signe, à partir des coordonnées de point de départ $(x'_0; y'_0)$ modifiées du facteur de grandeur et à partir de la somme des étapes d'interpolation $(x_i; y_i)$ effectuée entre les points terminaux de parties de contour sur la trame d'enregistrement, on détermine selon les équations:

$$x^* = x'_0 + x_i$$
$$y^* = y'_0 + y_i$$

les coordonnées de points d'image $(x^*; y^*)$ des points d'image sur la trame d'enregistrement qui se rapprochent le plus possible de la partie de contour concernée,

d) des étapes d'interpolation successives $(x_i; y_i)$ sur une modification de direction sur la trame d'enregistrement, sont vérifiées et chaque point d'image préalablement déterminé par interpolation entre deux étapes d'interpolation successives $(x_i; y_i)$ n'est repéré par un chiffre binaire de commande en tant que point de commutation pour la commande de l'organe d'enregistrement que lorsqu'une modification de direction préalablement déterminée des étapes d'interpolation successives $(x_i; y_i)$ à eu lieu,

e) pour un dispositif de mémorisation (62) de points de commutation organisé en places de mémorisation et en lignes de mémorisation, et prévu pour recevoir les chiffres binaire de commande, dispositif dans lequel la longueur d'une ligne de mémorisation dépend de la grandeur du signe éventuellement tourné et qui est adressable par des valeurs de coordonnées $(\overline{x}; \overline{y})$ d'un système de coordonnées $(\overline{XY})$ associé au dispositif de mémorisation de points commutation (62), des adresses d'inscription $(\overline{x}_s; \overline{y}_s)$ sont calculées à partir des coordonnées de points d'image $(x^*; y^*)$ des points d'image, repérés en tant que points de commutation, d'un signe ou d'une partie de signe et à partir de leur position sur le support d'enregistrement,

f) avec les adresses d'inscription ainsi calculées $(\overline{x}_s; \overline{y}_s)$, les chiffres binaires de commande des signes et des parties de signes sont inscrits successivement en tant qu'images de points de commutation dans le dispositif de mémorisation de points de commutation (62),

g) des adresses de lecture $(\overline{x}_L; \overline{y}_L)$ pour la lecture par points et par lignes des chiffres binaires de commande, sont formées à partir du dispositif de mémorisation de points de commutation (62),

h) pour un dispositif de mémorisation vidéo (17) organisé en places de mémorisation et en lignes de mémorisation et prévu pour recevoir les chiffres binaires, dispositif dans lequel la longueur d'une ligne de mémorisation correspond à la longueur d'une ligne d'image, et qui est adressable par des valeurs de coordonnées $(\overline{u}; \overline{v})$ d'un système de coordonnées $(\overline{UV})$ associé au dispositif de mémorisation vidéo (17), des adresses d'inscription $(\overline{u}_s; \overline{v}_s)$ sont calculées partir des adresses de lecture $(\overline{x}_L; \overline{y}_L)$ du dispositif de mémorisation de points de commutation (62) et à partir des positions des signes et des parties de signes sur le support d'enregistrement (29),

i) avec les adresses de lecture ainsi calculées $(\overline{x}_L; \overline{y}_L)$ pour le dispositif de mémorisation de points de commutation (62), les chiffres binaires de commande de l'image de points de commutation d'un signe ou d'une partie de signe, déposés dans le dispositif de mémorisation de points de commutation (62), sont respectivement lus par points et par lignes et, avec les adresses d'inscription calculées $(\overline{u}_s; \overline{v}_s)$ pour le dispositif de mémorisation vidéo (17) sont transcrits successivement sur les places de mémorisation de ce dispositif de mémorisation vidéo (17), qui correspond dans la position du signe considéré sur la ligne de texte à enregistrer,

k) lors de la transcription des chiffres binaires de commande des images de points de commutation des signes ou des parties de signes dans le dispositif de mémorisation vidéo (17), des places de mémorisation se situant en direction des lignes entre les places de mémorisation adressées lors de la transcription, sont en outre également occupées par des chiffres binaires de commande,

l) les adresses de lecture $(\overline{u}_L; \overline{v}_L)$ pour le dispositif de mémorisation vidéo (17) sont formées à partir des coordonnées de positions (u; v) des points d'image à enregistrer à un moment donné sur la page d'enregistrement (29) selon les équations:

$$\overline{u}_L = u$$
$$\overline{v}_L = v$$

et ensuite

m) les chiffres binaires déposés sous les adresses de lecture $(\overline{u}_L; \overline{v}_L)$ sont lus dans le dispositif de mémorisation vidéo (17) et sont convertis en signal de commande pour l'organe d'enregistrement, ce signal de commande déterminant la durée respective de mise en circuit ou bien de mise hors circuit de l'organe d'enregistrement.

2. Procédé pour l'enregistrement par points et par lignes de signes, notamment de caractères, sur une page d'enregistrement par photo-composition électronique, procédé dans lequel les données de signes et les données de positions nécessaires pour l'enregistrement, sont appelées et converties en un signal de commande pour un organe d'enregistrement susceptible de se déplacer par rapport à la page d'enregistrement, procédé dans lequel:

a) avant l'enregistrement, chaque contour fermé d'un signe est décrit en partant d'un point de départ sur chaque contour, à travers des parties de contour successives se succédant en direction périphérique autour du contour, et les coordonnées (x; y) des points terminaux de parties de contour ainsi que les coordonnées de points de départ $(x_0; y_0)$ sont déterminées dans une trame de codage d'un système de coordonnées (XY) rapporté au cadre des signes et sont mémorisées en tant que données de grandeurs de signes, lors de l'enregistrement,

b) la feuille d'enregistrement (29) est enregistrée successivement selon des parties en forme de bandes, une telle partie étant dénommée ci-après fenêtre d'exposition (200), dont la largeur correspond à la largeur de la page d'enregistrement (29) en direction des lignes d'images et dont la hauteur perpendiculaire aux lignes d'images, comprend au moins une ligne d'image, et la fenêtre d'exposition (200) lors de l'enregistrement, étant successivement déplacée respectivement de sa hauteur perpendiculairement aux lignes d'image sur la page d'enregistrement (29), sa position du moment étant indiquée sur la page d'enregistrement (29) par une coordonnée de position $(v_F)$,

c) les coordonnées de points de départ $(x_0; y_0)$ pour chaque contour et les coordonnées (x; y) des points terminaux de parties de contour d'une partie de signe, étant modifiées d'un facteur de grandeur qui résulte de la grandeur de signe à enregistrer et du rapport entre la trame de codage et une trame d'enregistrement souhaitée,

d) pour chaque partie de contour successive d'un signe ou d'une partie de signe, à partir des coordonnées de point de départ $(x'_0; y'_0)$ modifiées par le facteur de grandeur, et à partir de la somme des étapes d'interpolation $(x_i; y_i)$ effectuée entre les points terminaux d'une partie de contour sur la trame d'enregistrement, on détermine selon les équations:

$$x^* = x'_0 + \Sigma\, x_i$$
$$x^* = y'_0 + \Sigma\, y_i$$

les coordonnées de points d'image $(x^*; y^*)$ des points d'image sur la trame d'enregistrement qui se rapprochent le plus de partie de contour concernée,

e) des étapes d'interpolation successives $(x_i; y_i)$ sont vérifiées en ce qui concerne un changement de direction sur la trame d'enregistrement, et chaque point d'image préablement déterminé par interpolation entre deux étapes d'interpolation successives $(x_i; y_i)$ n'est reperé par un chiffre binaire de commande en tant que point de commutation pour la commande de l'organe d'enregistrement que lorsqu'une modification de direction préalablement déterminée des étapes d'interpolation successives $(x_i; y_i)$ à eu lieu,

f) pour un dispositif de mémorisation de points de commutation (62) organisé en places de mémorisation et en lignes de mémorisation et prévu pour recevoir les chiffres binaires, qui comporte un nombre de lignes de mémorisation correspondant au nombre de lignes d'image tombant dans la fenêtre d'exposition (200), et dont la longueur maximale dépend de la grandeur du signe éventuellement tourné, ce dispositif étant adressable par des valeurs coordonnées $(\overline{x}; \overline{y})$ d'un système de coordonnées $(\overline{XY})$ associé au dispositif de mémorisation de points de commutation (62) et à la fenêtre d'exposition (200), des adresses d'inscrip-tiion $(\overline{x}_S; \overline{y}_S)$ sont calculées selon les équations:

$$\overline{x}_S = x'_0 + \Sigma x_i$$
$$\overline{y}_S = v_g - v_F - y'_0 - \Sigma y_i$$

«$v_F$» étant la coordonnée de position du moment de la fenêtre d'exposition (200), tandis que «$v_g$» étant la coordonnée de position caractérisant la position momentanée de la ligne de base d'inscription du signe ou de la partie de signe, sur la page d'enregistrement (29), et «$x'_0$» et «$v_g - v_F - y'_0$» représentant les adresses de départ respectives,

g) avec les adresses d'inscription ainsi calculées $(\overline{x}_S; \overline{y}_S)$, sont inscrits successivement, en tant qu'images de points de commutation dans le dispositif de mémorisation de points de commutation (62) les chiffres binaires de commande des signes et des parties de signes qui tombent totalement ou partiellement dans la fenêtre d'exposition (200) pour chaque position de fenêtre,

h) les adresses de lecture $(\overline{x}_L; \overline{y}_L)$ pour la lecture par points et par lignes des chiffres binaires de commande, sont formées à partir du dispositif de mémorisation de points de commutation (62),

i) pour un dispositif de mémorisation vidéo (17) organisé en places de mémorisation et en lignes de mémorisation et prévu pour recevoir les chiffres binaires de commande des signes ou des parties de signes tombant sur la largeur de la fenêtre d'exposition (200), dispositif qui comporte un nombre de lignes de mémorisation correspondant au nombre des lignes d'images tombant dans la fenêtre d'exposition (200) et dont les longueurs correspondent à celles de ces lignes d'images, dispositif susceptible d'être adressé par des valeurs de coordonnées $(\overline{u}; \overline{v})$ d'un système de coordonnées $(\overline{UV})$ se rapportant au dispositif de mémorisation vidéo (17), des adresses d'inscription $(\overline{u}_S; \overline{v}_S)$ sont susceptibles d'être calculées selon les équations:

$$\overline{u}_s = \overline{u}_0 + \Sigma\, GB + VB + \overline{x}_L$$
$$\overline{v}_s = \overline{y}_L$$

«$\overline{u}_0$» caractérisant le début d'une ligne de texte sur la page d'enregistrement (29), «GB» caractérisant la largeur totale du cadre des signes, «$\Sigma\, GB$» caractérisant la somme des largeurs totales des signes ou des parties de signes précédant sur une ligne d'image, et «VB» caractérisant la largeur préalable du signe actuel sur la page d'enregistrement (29),

k) avec les adresses de lecture ainsi calculées ($\overline{x}_L$; $\overline{y}_L$) pour le dispositif de mémorisation de points de commutation (62), les chiffres binaires de commande de l'image d'un point de commutation d'un signe ou d'une partie de signe déposé dans le dispositif de mémorisation de points de commutation (62) sont lus par points et par lignes et avec les adresses d'inscription calculées ($\overline{u}_s$; $\overline{v}_s$) pour le dispositif de mémorisation (17) sont transcrits successivement sur les places de mémorisation du dispositif de mémorisation vidéo (17) qui correspondent à la position du signe ou de la partie de signe correspondante dans la ligne de texte à enregistrer,

l) lors de cette transcription des chiffres binaires de commande des images de points de commutation des signes ou des parties de signe dans le dispositif de mémorisation vidéo (17), des places de mémorisation se situant en direction des lignes entre les places de mémorisation adressées lors de la transcription, sont en outre également occupées par des chiffres binaires,

m) des adresses de lecture ($\overline{u}_L$; $\overline{v}_L$) pour le dispositif de mémorisation vidéo (17) sont formées selon les équations:

$$\overline{u}_L = u$$
$$\overline{v}_L = v - v_F$$

«u; v» étant les coordonnées des points d'image devant être enregistrés à ce moment sur la page d'enregistrement, tandis que «$v_F$» sont les coordonnées de positions de la fenêtre d'exposition (200),

n) les chiffres binaires déposés sous les adresses de lecture ($\overline{u}_L$; $\overline{v}_L$) sont lus dans le dispositif de mémorisation vidéo (17) et convertis en signal de commande pour l'organe d'enregistrement, ce signal de commande déterminant respectivement la durée de mise en circuit ou la durée de mise hors circuit de l'organe d'enregistrement.

3. Procédé selon la revendication 2, caractérisé en ce que les signes ou les parties de signes tombant complètement ou partiellement dans la fenêtre d'exposition (200) sont déterminés dans le système de coordonnées ($\overline{UV}$) se rapportant au dispositif de mémorisation vidéo (17), par une comparaison des coordonnées de positions des données de texte avec les coordonnées actuelles de positions de la fenêtre d'exposition (200).

4. Procédé selon une des revendications 1 à 3, caractérisé en ce qu'un point d'image est repéré en tant que point de commutation sur un contour par un chiffre binaire, lorsqu'au moins une des étapes d'interpolation successives ($x_i$; $y_i$) s'effectue perpendiculairement à la direction des lignes d'image et que deux étapes d'interpolation successives ($x_i$; $y_i$) s'effectuent en direction périphérique du contour.

5. Procédé selon une des revendications 1 à 4, caractérisé en ce que lors de la transcription des chiffres binaires de commande dans le dispositif de mémorisation vidéo (17) pour former les structures de chiffres binaires des signes ou des parties de signes, sont en outre occupées par des chiffres binaires de commande, les places de mémorisation du dispositif de mémorisation vidéo (17) qui se situent respectivement en direction des lignes d'image entre les places de mémorisation repérées en tant que points de commutation sur les bords antérieurs des parties d'image noires coupées par les lignes d'image, des signes ou des parties de signes, et les places de mémorisation repérées en tant que points de commutation sur les bords postérieurs des parties d'image noires concernées.

6. Procédé selon une des revendications 1 à 5, caractérisé en ce que:

a) les différences de coordonnées ($\Delta x$; $\Delta y$) entre le point de départ et le point terminal, d'une partie de contour, sont déterminées,

b) les étapes d'interpolation ($x_i$; $y_i$) effectuées lors de l'interpolation sont totalisées en tenant compte de leur sens,

c) un signal «fin de partie» pour une partie de contour est produit lorsque la somme des étapes d'interpolation effectuées ($x_i$; $y_i$) est égale aux valeurs de différences de coordonnées ($\Delta x$; $\Delta y$).

7. Procédé selon une des revendications 1 à 6, caractérisé en ce que:

a) le dispositif de mémorisation de points de commutation (62) fonctionne en alternance à l'aide de deux mémoires partielles (88; 88'),

b) les chiffres binaires de commande de l'image de points de commutation d'un signe ou bien d'une partie de signe, sont transcrits à partir d'une mémoire partielle dans le dispositif de mémorisation vidéo (17), et

c) simultanément les chiffres binaires de commande de l'image de points de commutation du signe ou de la partie de signe suivant sont transcrits dans l'autre mémoire partielle.

8. Procédé selon une des revendications 1 à 7, caractérisé en ce que:

a) le dispositif de mémorisation vidéo (17) fonctionne en alternance à l'aide de deux mémoires partielles (111; 111'),

b) les chiffres binaires de commande des signes ou des parties de signe à enregistrer sont lus dans une mémoire partielle en vue de l'enregistrement, et

c) simultanément les chiffres binaires de commande des images de points de commutation des signes ou des parties de signes à enregistret ensuite, sont transcrits du dispositif de mémorisation de points de commutation (62) dans l'autre mémoire partielle.

9. Procédé selon une des revendications 1 à 8, dans lesquel les signes sont respectivement localisés par une surface de signe sur le cadre des signes, procédé caractérisé en ce que la zone d'adressage des adresses de lecture ($\bar{x}_L$; $\bar{y}_L$) du dispositif de mémorisation de points de commutation (62) pour la lecture des chiffres binaires de commande de l'image de points de commutation d'un signe, est limitée à la surface considérée du signe.

10. Procédé selon une des revendications 1 à 9, caractérisé en ce que les parties de contour sont des segments de droite, des segments de cercle dans le sens des aiguilles d'une montre et des segments de cercle dans le sens inverse des aiguilles d'une montre.

11. Procédé selon une des revendications 1 à 10, caractérisé en ce que le sens périphérique sur un contour externe d'un signe est fixé dans le sens des aiguilles d'une montre, tandis qu'il est fixé dans le sens inverse des aiguilles d'une montre sur un contour interne.

12. Procédé selon une des revendications 1 à 11, caractérisé en ce que les données codées de signes contiennent des données caractéristiques sous la forme de paramètres de surfaces pour les signes et les cadres de signes, des instructions de contour et les coordonnées de points de départ ($x_0$; $y_0$) pour chaque contour.

13. Procédé selon la revendication 12, caractérisé en ce que des parties de contour respectivement successives du même type (segment de droite, segment de cercle) sont rassemblées en une instruction de contour qui contient une information sur le type des parties de contour et sur le nombre des parties de contour du même type, ainsi que les valeurs de coordonnées pour chaque partie de contour.

14. Procédé selon la revendication 13, caractérisé en ce que pour un segment de droite, sont repsectivement indiquées les valeurs de coordonnées du point terminal du segment de droite, tandis que pour un segment de cercle sont respectivement indiquées les valeurs de coordonnées du point terminal et les valeurs de coordonnées du point de départ par rapport au centre du segment de cercle concerné.

15. Procédé selon une des revendications 2 à 14, caractérisé en ce que chaque partie d'un signe qui tombe dans la fenêtre d'exposition (200), est également enregistrée dans la position actuelle de la fenêtre d'exposition (200).

16. Procédé selon une des revendications 1 à 15, caractérisé en ce que les mémoires partielles (88, 88') du dispositif de mémorisation de points de commutation (62) et les mémoires partielles (111; 111') du dispositif de mémorisation vidéo (17) sont effacées simultanément lors de la lecture des données qui y sont mémorisées.

17. Dispositif pour l'enregistrement par points et par lignes de signes, notamment de caractères, sur une page d'enregistrement en photo-composition électronique, dispositif constitué par:

a) un dispositif de mémorisation (3; 5) pour des données de texte,

b) une mémoire de signes (8) pour déposer des données codées de signes, et qui est reliée au dispositif de mémorisation (3; 5) pour appeler des données codées de signe par l'intermédiaire de données de texte,

c) un générateur de signaux vidéo (12) pour convertir les données codées de signes ainsi appelées en chiffres binaires de commande, avec un dispositif de décodage raccordé à la mémoire de signes (8) et avec un dispositif de mémorisation intermédiaire pour les chiffres binaires de commande,

d) un dispositif de mémorisation vidéo (17) est en liaison avec le dispositif de mémorisation intermédiaire pour mémoriser les chiffres binaires de commande des signes sur les places de mémorisation qui correspondent aux positions des signes sur la page d'enregistrement (29),

e) un organe d'enregistrement (2) recevant comme signal de commande les chiffres binaires de commande et qui est raccordé au dispositif de mémorisation vidéo (17),

f) un mécanisme de commande d'adressage (39) qui est raccordé au dispositif de mémorisation vidéo (17) pour établir des adresses de lecture ($\bar{u}_L$, $\bar{v}_L$) pour le dispositif de mémorisation vidéo (17) en fonction des positions relatives de l'organe d'enregistrement (2) par rapport à la page d'enregistrement (29), et

g) un support d'enregistrement déplaçable (28) pour la page d'enregistrement (29), dispositif caractérisé en ce que:

h) la mémoire de signes (8) contient de données de signes codées en contour, qui décrivent chaque contour fermé d'un signe en partant d'un point de départ sur chaque contour, et à travers les parties de contour se succédant selon un sens périphérique autour du contour, et ces données de signe indiquant les coordonnées ($x$; $y$) des points terminaux de parties de contour et les coordonnées de points de départ ($x_0$; $y_0$) dans une trame de codage,

i) le dispositif de décodage (57; 58; 59) du générateur de signaux vidéo (21) est prévu pour le décodage des données codées en contour des signes en les coordonnées ($x$, $y$) des points terminaux de parties de contour, en les coordonnées de points de départ ($x_0$; $y_0$), et en valeur de longueur correspondante ainsi que pour modifier les coordonnées et les valeurs de longueurs d'un facteur de grandeurs prédéfini,

j) le dispositif de mémorisation intermédiaire du générateur de signaux vidéo (12) est prévu en tant que dispositif de mémorisation de points de commutation (62) pour des points de commutation d'un signe ou d'une partie de signe,

k) le générateur de signaux vidéo (12) comporte les composantes supplémentaires suivantes:

k1) un étage d'interpolation (60) raccordé au dispositif de décodage (57; 58; 59) pour la détermination des coordonnées de points d'image ($x^*$; $y^*$) des points d'image dans une trame d'enregistrement, ces points se rapprochant le plus possible des parties de contour des signes ou bien des parties de signes des étapes d'interpolation appropriées ($x_i$; $y_i$),

k2) un étage d'exploitation (61) qui est en liaison avec l'étage d'interpolation (60) pour la vérification d'étapes d'interpolation successives $(x_i; y_i)$, en ce qui concerne un changement de sens dans la trame d'enregistrement et pour repérer des points d'image entre deux étapes d'interpolation successives $(x_i; y_i)$ en tant que points de commutation pour la commande de l'organe d'enregistrement, lorsqu'un changement de sens préalablement déterminé des étapes d'interpolation successives $(x_i; y_i)$ a eu lieu, et

k3) des compteurs d'adresses (101; 102) qui sont raccordés au dispositif de codage (57; 58; 59) à l'étage d'interpolation (60) et au dispositif de mémorisation de points de commutation (62), pour obtenir des adresses d'inscription $(x_S, y_S)$ pour le dispositif de mémorisation de points de commutation (62)

l) et qu'un mécanisme de commande d'adressage (120) est prévu, qui est relié au dispositif de décodage (57; 58; 59), au dispositif de mémorisation de points de commutation (62) et au dispositif de mémorisation vidéo (17), pour obtenir des adresses de lecture $(\overline{x}_L; \overline{y}_L)$ pour le dispositif de mémorisation de points de commutation (62) et des adresses d'inscriptions $(\overline{u}_S; \overline{v}_S)$ pour le dispositif de mémorisation vidéo (17) lors de la transcription des chiffres binaires de commande.

18. Dispositif selon la revendication 17, caractérisé en ce que le dispositif de décodage (57; 58; 59) comporte:

a) un décodeur (57) pour décoder les données de signes,

b) un étage de transformation (58) relié au décodeur (57) pour modifier les coordonnées d'un facteur de grandeur,

c) un étage de calcul (59) relié à l'étage transformation (58).

19. Dispositif selon la revendication 17 ou 18, caractérisé en ce que l'organe d'enregistrement (2) comprend:

a) un générateur de faisceau laser (19),

b) un modulateur (21) commandé par le signal de commande pour l'enclenchement et le déclenchement du faisceau laser,

c) un dispositif de déviation (25; 27) pour le faisceau laser sur la page d'enregistrement (29).

20. Dispositif selon la revendication 19, caractérisé en ce que le dispositif de déviation (25; 27) est un miroir polygonal.

21. Dispositif selon une des revendictions 17 à 20, caractérisé en ce que le dispositif de mémorisation de points de commutation (62) est constitué par deux mémoires partielles (88; 88') fonctionnant en alternance.

22. Dispositif selon une des revendications 17 à 21, caractérisé en ce que le dispositif de mémorisation vidéo (17) est constitué par deux mémoires partielles (111; 111') fonctionnant en alternance.

**Fig. 1**

Fig. 2a

Fig. 2b

EP 0 153 584 B1

*Fig. 3*

*Fig. 5*

Fig. 4

*Fig. 6*

*Fig. 8*

*Fig. 11*

Fig. 7

Fig. 9

EP 0 153 584 B1

Fig. 10

EP 0 153 584 B1

Fig. 12

Speicher 88 / Schreiben

Speicher 88 / Lesen

Speicher 88'/ Schreiben

Speicher 88'/ Lesen

Speicherwechsel

Speicher 111 / Schreiben

Speicher 111/ Lesen

Speicher 111'/ Schreiben

Speicher 111'/ Lesen

Speicherwechsel

EP 0 153 584 B1

Fig. 13